# FASCICULE DE BREVET EUROPEEN

(11) **EP 2 487 123 B1**
(45) Date de publication et mention de la délivrance du brevet: **03.09.2014**
(21) Numéro de dépôt: 12154797.0
(22) Date de dépôt: 09.02.2012
(51) Int. Cl.: B65G 1/127, B65G 1/137

(54) **Ensemble comprenant un poste de préparation de commandes avec au moins une cheminée d'accumulation verticale et de distribution séquencée de contenants.**
Vorrichtung mit einer Vorbereitungsstelle für Aufträge, die mindestens ein Rohr zur vertikalen Speicherung und zur folgegesteuerten Ausgabe von Inhalten umfasst
System with order picking station including at least one stack for vertical accumulation and sequenced distribution of containers.

(30) Priorité: 11.02.2011 FR 1151153
(43) Date de publication de la demande: 15.08.2012
(73) Titulaire: SAVOYE, 21000 Dijon (FR)
(72) Inventeur: Collin, Jean-Michel, 21190 MERCEUIL (FR)
(74) Mandataire: Guéné, Patrick

(56) Documents cités:
- CH-A5- 678 940
- DE-A1- 10 225 332
- JP-A- 4 116 001
- JP-A- 57 081 004
- JP-A- 2001 088 908
- JP-U- 55 002 808
- US-A- 4 909 697
- US-A- 5 529 165
- US-A- 5 595 263

## Description

### 1. DOMAINE DE L'INVENTION

Le domaine de l'invention est celui de la logistique et des entrepôts. On rappelle qu'un entrepôt est un bâtiment logistique destiné au stockage de produits en vue de leur expédition vers un client. Les principaux processus mis en oeuvre au sein d'un entrepôt sont la réception de commandes, la mise en stock, la préparation de commandes, l'expédition et la gestion du stock.

La présente invention concerne plus précisément un ensemble comprenant un poste de préparation de commandes (aussi appelé « poste de picking »), notamment mais non exclusivement dans le cas où celui-ci fait partie d'un système de stockage automatisé comprenant un magasin de stockage et un ou plusieurs postes de préparation de commandes.

La présente invention peut s'appliquer à tous types de préparation de commandes, et notamment :
- la préparation de commandes par prélèvements de produits dans des contenants de stockage : un opérateur (ou un automate, c'est-à-dire un robot) reçoit une liste de prélèvements (sur papier, sur écran d'un terminal ou encore sous forme vocale) lui indiquant, pour chaque colis à expédier (aussi appelé contenant d'expédition), la quantité de chaque type de produits qu'il doit collecter dans des contenants de stockage et regrouper dans le colis à expédier ; et
- la préparation de commandes par palettisation de contenants de stockage contenant eux-mêmes des produits : un opérateur (ou un automate) reçoit une liste de prélèvements (sur papier, sur écran d'un terminal, sous forme vocale, ou encore sous forme de mission informatique dans le cas de l'automate) lui indiquant, pour chaque palette à expédier (aussi appelée contenant d'expédition), la quantité de chaque type de contenants de stockage (par exemple des cartons) qu'il doit collecter et décharger sur la palette à expédier.

On distingue généralement deux types de postes de préparation de commandes : les postes avec mouvements et les postes fixes.

Les postes avec mouvements mettent en oeuvre le principe « homme vers produit », selon lequel le préparateur se déplace jusqu'au lieu de prélèvement et y prélève le nombre de produits commandés.

Les postes fixes mettent en oeuvre le principe « produits vers homme » (ou « goods to man » en anglais), selon lequel des contenants de stockage (par exemple des cartons ou des plateaux), contenant chacun des produits d'un type donné, sont sortis automatiquement d'un magasin de stockage (sur des dispositifs de transfert appelés chariots ou navettes) et arrivent devant ou à proximité du préparateur qui doit prélever dans chacun le nombre de produits commandés.

Cette distinction entre postes avec mouvement et postes fixes vaut également dans le cas de la palettisation : soit le préparateur se déplace pour aller chercher les contenants de stockage à décharger sur la palette à expédier, soit ces contenants de stockage sont amenés automatiquement jusqu'au préparateur (par exemple par un transstockeur).

La présente invention se place dans le cas d'un poste fixe de préparation de commandes.

Dans la présente description, par élévateur on entend tout système permettant de prendre une ou plusieurs charges (contenant(s) de stockage ou d'expédition) à un niveau donné et de la ou les déposer à un autre niveau.

### 2. ARRIÈRE-PLAN TECHNOLOGIQUE

Pour la mise en oeuvre du principe « produits vers homme » (« goods to man »), les postes fixes de préparation de commande possèdent généralement une configuration particulière et doit mettre en oeuvre plusieurs fonctions, telles que par exemple (sans que celle liste soit exhaustive) :
- approvisionnement de deux types de charges, à savoir les contenants de stockage (qui contiennent des produits qui vont servir à la préparation des commandes) et les contenants d'expédition (dans ou sur lesquels vont être placés les produits à expédier, conformément aux commandes) ;
- évacuation des deux types de charges, à savoir les contenants de stockage (sauf dans le cas de la palettisation où c'est le contenant de stockage lui-même qui est placé sur la palette formant le contenant d'expédition) et les contenants d'expédition (après qu'ils ont été remplis - ou chargés dans le cas de la palettisation - conformément aux commandes) ;

- synchronisation entre deux flux de nature différente, l'un pour les contenants de stockage et l'autre pour les contenants d'expédition ;
- accumulation d'une quantité de charges (c'est-à-dire d'un nombre déterminé de contenants de stockage et/ou de contenants d'expédition) en amont de l'opérateur (ou l'automate), en fonction de la configuration du poste de préparation ;
- pesage sur un des deux types de charges ou les deux (cette fonction de pesage permet le contrôle de la préparation) ;
- préparation classique (l'opérateur prélève des produits dans les contenants de stockage qui passent devant lui et place les produits prélevés dans des contenants d'expédition) et inversée (l'opérateur enlève des produits des contenants de stockage qui passent devant lui, les contenants de stockage dont le contenu est ainsi modifié devenant les contenants d'expédition) ;
- exclusion (possibilité de sortir un contenant de stockage hors d'un magasin de stockage automatique) ;
- réapprovisionnement (possibilité de rentrer un contenant de stockage dans un magasin de stockage automatique) ;
- inventaire (par exemple, on sort les contenants de stockage d'un magasin de stockage automatique, puis les fait passer par le poste de préparation afin de savoir exactement les produits qu'ils contiennent, et enfin on les range à nouveau dans le magasin de stockage automatique) ;
- etc.

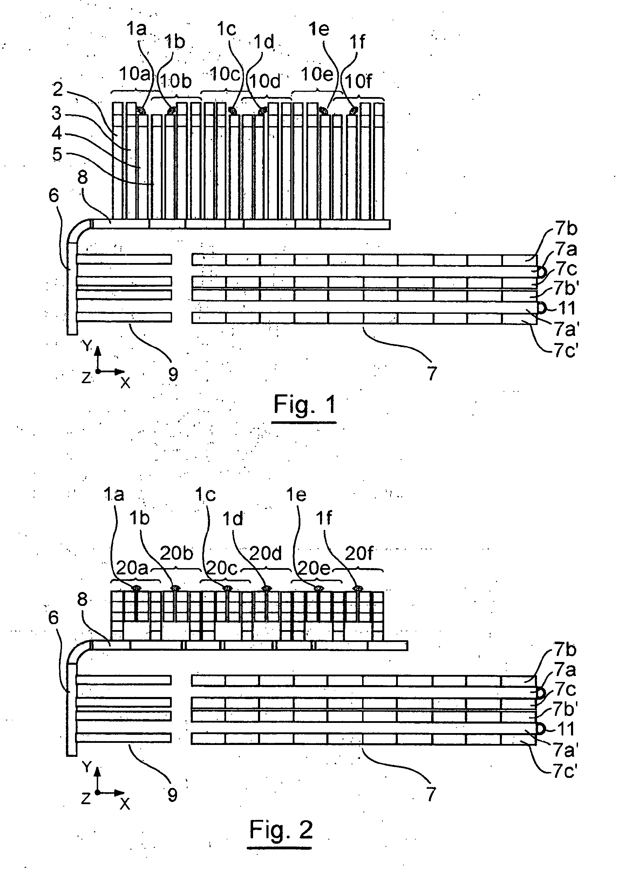

On présente maintenant, en relation avec la **figure 1**, une vue de dessus d'un exemple de configuration connue pour un système de stockage automatisé de préparation de colis comprenant :
- un magasin de stockage 7 comprenant plusieurs (deux dans cet exemple) ensembles formés chacun d'une allée 7a, 7a' desservant de part et d'autre une étagère de stockage 7b, 7c, 7b', 7c' à plusieurs niveaux de rangements superposés. Chaque étagère est subdivisée sur sa longueur en emplacements de stockage destinés à accueillir chacun un contenant (plateaux ou cartons par exemple) de stockage de produits. Chaque allée reçoit, à chaque niveau de rangement, des voies pour le déplacement d'un chariot (aussi appelé navette) qui assure le déplacement des contenants de stockage, pour les placer à l'intérieur ou les retirer des emplacements de stockage. Les chariots peuvent se déplacer horizontalement, à un niveau de rangement donné, ainsi que verticalement, d'un niveau à un autre d'une allée par des élévateurs disposés chacun à une extrémité d'une allée ;
- un ensemble de convoyeurs amenant les contenants de stockage depuis le magasin jusqu'aux postes de préparation, et réciproquement. Dans l'exemple de la figure 1, on distingue trois sous-ensembles de convoyeurs : le premier (référencé 9) est placé immédiatement en sortie du magasin 7 et comprend des convoyeurs placés dans l'axe des étagères de stockage ; le second (référencé 6) comprend des convoyeurs placés perpendiculairement et à la suite de ceux du premier sous-ensemble ; le troisième (référencé 8) comprend des convoyeurs placés perpendiculairement et à la suite de ceux du deuxième sous-ensemble, ainsi que le long d'une des étagères de stockage 7b du magasin 7. La hauteur de plan de roulement (HPR) des convoyeurs utilisés dans ces sous-ensembles 6, 7 et 8 est généralement comprise entre 750 et 1750 mm ;
- plusieurs (six dans cet exemple) postes de préparation de commandes 10a, 10b, 10c, 10d, 10e et 10f, occupés chacun par un opérateur 1a, 1b, 1c, 1d, 1e et 1f et s'étendant perpendiculairement aux convoyeurs du troisième sous-ensemble précité 8. Un exemple de configuration d'un poste de préparation est détaillé ci-après ;
- un système informatique de gestion central (non illustré) (aussi appelé système de pilotage), ayant en charge le pilotage de l'ensemble du système de stockage automatisé (magasin de stockage, ensemble de convoyeurs et postes de préparation). Il gère également la liste de commandes associée à chaque contenant d'expédition (colis) et donc l'ordre des lignes de commande formant cette liste, en fonction de l'emplacement des contenants de stockage dans le magasin de stockage, de la disponibilité des chariots et des élévateurs du magasin de stockage, ainsi que des besoins en produits des différents contenants d'expédition (colis) à préparer qui se succèdent au poste de préparation. Ceci a pour but d'optimiser tous les déplacements et les temps de préparation des contenants d'expédition (colis) et d'assurer la synchronisation entre l'arrivée, au poste de préparation, d'un contenant d'expédition (colis en préparation) et des contenants de stockage (contenant les produits indiqués dans la liste de commande associée à ce contenant de stockage).

Dans un exemple de réalisation, chaque poste de préparation comprend (les références données ci-après sont celles des éléments du poste référencé 10a) :
- un premier circuit de convoyeurs pour les contenants de stockage, formé de deux colonnes horizontales de convoyeurs : l'une (colonne aller 2) pour le déplacement des contenants de stockage depuis le troisième sous-ensemble de convoyeurs 8 jusqu'à l'opérateur 1a, et l'autre (colonne retour 3) pour le déplacement inverse ; et
- un deuxième circuit de convoyeurs pour les contenants d'expédition, formé de deux colonnes horizontales de convoyeurs : l'une (colonne aller 4) pour le déplacement des contenants d'expédition depuis le troisième sous-ensemble de convoyeurs 8 jusqu'à l'opérateur 1a, et l'autre (colonne retour 5) pour le déplacement inverse.

Dans chacun des premier et deuxième circuits, la colonne aller 2 et 4 (composée de convoyeurs classiques horizontaux) réalise la fonction d'accumulation d'une quantité déterminée de contenants en amont de l'opérateur (ou l'automate).

Un contenant de stockage effectue le parcours suivant : il est prélevé par un chariot dans le magasin de stockage 7, puis convoyé successivement par les convoyeurs des premier, deuxième et troisième sous-ensembles 9, 6 et 8, puis par les convoyeurs de la colonne aller 2, pour être présenté à l'opérateur. Dans l'autre sens (après présentation à l'opérateur), le contenant de stockage effectue le parcours inverse : il est convoyé par les convoyeurs de la colonne retour 3, puis successivement par les convoyeurs des troisième, deuxième et premier sous-ensembles 9, 6 et 8, et enfin replacé dans le magasin de stockage 7 par un chariot.

Il est à noter que les contenants de stockage doivent être présentés dans un ordre à l'opérateur. Il en est de même pour les contenants d'expédition prédéterminé. En outre, comme déjà indiqué plus haut, le flux de contenants de stockage doit être synchronisé avec le flux de contenants d'expédition. Typiquement, pour un contenant d'expédition donné amené devant l'opérateur (par exemple sur sa gauche), on fait défiler successivement devant l'opérateur (par exemple sur sa droite ) plusieurs contenants de stockage dans lesquels se trouvent des produits que l'opérateur doit prélever et placer dans le contenant d'expédition donné.

Afin de relâcher les contraintes sur le magasin de stockage, on admet que les contenants (contenants de stockage ou contenants d'expédition) ne sortent pas du magasin de stockage dans l'ordre dans lequel ils doivent être présentés à l'opérateur. Il est donc nécessaire d'effectuer une opération de séquencement des contenants entre le magasin de stockage et le poste de préparation où se trouve l'opérateur. Dans l'exemple de la figure 1, cette opération de séquencement est effectuée par le second sous-ensemble de convoyeurs 6 qui assure lui-même le rôle de tampon : les contenants de stockage y circulent en boucle et lorsque le contenant de stockage attendu sur les convoyeurs de la colonne aller 2 se présente devant cette dernière (afin de compléter la séquence de contenants de stockage attendus au poste de préparation), celui-ci est transféré sur les convoyeurs de la colonne aller 2, les autres contenants de stockage continuant à circuler sur le second sous-ensemble de convoyeurs 6. Ce procédé est effectué pour chacun des contenants de stockage attendus dans un ordre d'arrivée prédéterminé au poste de préparation.

De manière classique, cet ordre d'arrivée est prédéterminé (c'est-à-dire déterminé, pour chaque contenant, avant que ce contenant n'atteigne le poste de préparation) par le système de pilotage et, si nécessaire, recalculé au cours de l'acheminement des contenants de la sortie du magasin de stockage vers le poste de préparation où se trouve l'opérateur (par exemple pour tenir compte d'une panne d'un élément du système).

La hauteur de plan de roulement (HPR) des convoyeurs utilisés dans ces premier et deuxième circuits est généralement de 750 mm.

Dans l'exemple illustré sur la figure 1, la colonne retour pour les contenants d'expédition 5 est commune aux postes de préparation référencés 10a et 10b (ces deux postes adjacents sont configurés de manière symétrique l'un par rapport à l'autre, la colonne commune formant un axe de symétrie). Il en est de même pour les postes de préparation adjacents référencés 10e et 10d, ainsi que pour ceux référencés 10e et 10f. Ceci vise à réduire l'emprise au sol des postes de préparation.

Malheureusement, malgré cette astuce, la solution actuelle à base de convoyeurs classiques horizontaux (comme décrit ci-dessus en relation avec la figure 1) présente plusieurs inconvénients.

Tout d'abord, elle présente une trop forte consommation de m² à faible hauteur de plan de roulement (750 mm typiquement). A titre d'exemple de cette emprise au sol trop élevée, la surface nécessaire pour six postes de préparation de commandes (comme dans l'exemple de la figure 1) est de l'ordre de 100 m².

Un autre inconvénient est que la densité au sol des convoyeurs classiques horizontaux compris dans les postes de préparation est telle qu'elle rend difficile l'accès maintenance à ces convoyeurs (nappe de convoyeurs trop dense).

Un autre inconvénient est que, sauf à augmenter encore l'emprise au sol du poste de préparation (en augmentant la longueur de la colonne aller de chacun des premier et deuxième circuits), il n'est pas possible d'augmenter le nombre de contenants pouvant être accumulés en amont de l'opérateur (ou l'automate).

Encore un autre inconvénient est que, dans certaines configurations, l'emprise au sol des postes de préparation empêche ou rend difficile l'accès maintenance pour les chariots (aussi appelés navettes) utilisés dans le magasin de stockage. On est alors parfois obligé, pour la maintenance de ces chariots, d'accéder au magasin de stockage par l'arrière, avec un système à palan (référencé 11 sur la figure 1) qui est peu ergonomique.

Encore un autre inconvénient est qu'il n'est pas possible de traiter de manière optimale le cas où l'on souhaite présenter plusieurs fois successivement un même contenant à l'opérateur. Par exemple, pour deux commandes distinctes, l'opérateur doit prélever un produit dans un contenant de stockage donné et le placer dans un premier contenant d'expédition, puis quelques instants plus tard (et après qu'un ou plusieurs autres contenants de stockage ont été présentés à l'opérateur) l'opérateur doit prélever un autre produit dans le même contenant de stockage donné et le placer dans un deuxième contenant d'expédition. En effet, en reprenant cet exemple, on utilise actuellement le second sous-ensemble de convoyeurs 6 pour effectuer une opération de réintroduction du contenant de stockage donné dans la colonne aller 2 du premier circuit du poste de préparation (10a par exemple). Ceci n'est pas optimal car l'intervalle de temps entre deux présentations successives du même contenant à l'opérateur ne peut pas être faible et correspond à la durée de parcours par ce contenant de l'ensemble du circuit suivant : convoyeurs de la colonne retour 3, puis convoyeurs du second sous-ensemble de convoyeurs 6, et enfin convoyeurs de la colonne aller 2. En pratique, si cet intervalle de temps est trop élevé, on fait sortir du magasin de stockage deux contenants de stockage qui contiennent le (même) type de produits souhaités pour les deux commandes concernées. On augmente alors le nombre de mouvements effectués par le magasin de stockage, ce qui n'est pas une solution satisfaisante. En outre, pour gérer cette augmentation du nombre de mouvements effectués par le magasin de stockage, on augmente généralement le nombre d'allées du magasin de stockage (afin de ne pas dépasser une capacité maximale d'entrées/sorties pouvant être effectuées par le ou les élévateurs disposés à chaque extrémité d'une allée).

On connaît également le document CH 678940 A5, correspondant au préambule de la revendication 1, qui concerne un système de stockage et de picking rapide, adapté en particulier pour les petites pièces. Le système comprend deux convoyeurs horizontaux (4, 5), l'un étant ménagé à proximité du sol et l'autre à une hauteur donnée. Pour effectuer la liaison entre ces deux convoyeurs horizontaux, le système prévoit un convoyeur vertical muni d'emplacements de stockage (9) entraînés en rotation, autour de deux axes (12, 13), par l'intermédiaire d'une chaîne (14), ainsi que d'éléments (17, 18) formant cadre et guidés. La technique décrite permet ainsi de stocker des produits amenés par un opérateur au niveau d'un point d'entrée (2) jusqu'à une zone de stockage située en hauteur. Ce document n'aborde pas la problématique de la réalisation d'un poste de préparation assurant la fonction d'accumulation et l'opération de séquencement (ou (ré)ordonnancement), tout en réduisant l'emprise au sol de ce poste de préparation. Il n'offre donc pas de solution technique pour résoudre cette problématique.

### 3. EXPOSÉ DE L'INVENTION

Il est proposé un ensemble, comprenant un poste de préparation de commandes piloté par un système de pilotage, selon la revendication 1.

Le principe général de l'invention consiste donc à effectuer, au sein d'un poste de préparation de commandes, une accumulation verticale de contenants de stockage grâce à (au moins) une structure (appelée cheminée) assurant en outre une fonction de distribution séquencée des contenants de stockage. Ainsi, la solution proposée présente plusieurs avantages et permet notamment:
- de réduire l'emprise au sol du poste de préparation de commandes ;
- de faciliter l'accès maintenance aux éléments compris dans le poste de préparation (pas de nappe de convoyeurs trop dense);
- d'augmenter le nombre de contenants pouvant être accumulés, sans impact négatif sur l'emprise au sol du poste de préparation ; et
- de faciliter l'accès maintenance pour les chariots utilisés dans le magasin de stockage.

Dans une première application, le premier circuit comprend en outre :
- des premiers moyens de présentation, à un opérateur ou un automate, des contenants de stockage sortant de ladite au moins une première cheminée ;
- des premiers moyens d'évacuation, permettant de transférer vers ledit au moins un premier élévateur au moins certains des contenants de stockage après qu'ils ont été présentés à l'opérateur ou l'automate;
- un premier convoyeur retour, recevant des contenants de stockage provenant des premiers moyens d'évacuation via ledit au moins un premier élévateur.

Ainsi, dans cette première application, les contenants de stockage sont présentés à un opérateur ou un automate en aval de ladite au moins une première cheminée, et ledit au moins un premier élévateur est utilisé en amont et en aval de ladite au moins une première cheminée.

Selon une caractéristique particulière de la première application, le poste de préparation de commandes possède un deuxième circuit comprenant :
- un deuxième convoyeur aller, recevant des contenants d'expédition de produits ;
- des deuxièmes moyens d'accumulation d'une quantité déterminée de contenants d'expédition reçus par le deuxième convoyeur aller, lesdits deuxièmes moyens d'accumulation comprenant :
   * au moins une deuxième cheminée comprenant des emplacements mobiles superposés pouvant chacun recevoir et déplacer vers le bas au moins un contenant d'expédition, ladite au moins une deuxième cheminée formant un moyen d'accumulation verticale et de distribution séquencée de contenants d'expédition préalablement placés dans les emplacements ;
   * au moins un deuxième élévateur, permettant de faire entrer dans ladite au moins une deuxième cheminée des contenants d'expédition venant du deuxième convoyeur aller ;
- des deuxièmes moyens de présentation, à l'opérateur ou l'automate, des contenants d'expédition sortant de ladite au moins une deuxième cheminée.

En d'autres termes, le principe général évoqués ci-dessus pour les contenants de stockage s'applique également aux contenants d'expédition.

Selon une caractéristique particulière de la première application, le deuxième circuit comprend en outre :
- des deuxièmes moyens d'évacuation, permettant de transférer vers ledit au moins un deuxième élévateur au moins certains des contenants d'expédition après qu'ils ont été présentés à l'opérateur ou l'automate ;
- un deuxième convoyeur retour, recevant des contenants d'expédition provenant des deuxièmes moyens d'évacuation via ledit au moins un deuxième élévateur.

Selon une deuxième application, le premier circuit comprend en outre des moyens de palettisation, permettant de disposer sur des palettes ou autre supports des contenants de stockage sortant de ladite au moins une première cheminée.

Ainsi, dans cette deuxième application, on effectue une palettisation à couche(s) en aval de ladite au moins une première cheminée.

Selon l'invention, le poste de préparation de commandes comprend des moyens de lecture d'un identifiant porté par un contenant de stockage donné venant du premier convoyeur aller, et le système de pilotage permet de :
- sélectionner un des emplacements de ladite au moins une première cheminée, en fonction de l'identifiant lu et d'une séquence prédéterminée définissant l'ordre dans lequel les contenants de stockage doivent sortir de ladite au moins une première cheminée ;
- piloter ledit au moins un premier élévateur afin de faire entrer le contenant de stockage donné dans l'emplacement sélectionné.

Ainsi, ladite au moins une première cheminée permet d'effectuer un (ré)ordonnancement des contenants de stockage. On rappelle que, en général, les contenants de stockage n'arrivent pas au poste de préparation (c'est-à-dire, par exemple, ne sortent pas du magasin de stockage) dans l'ordre dans lequel ils doivent être présentés à l'opérateur ou aux moyens de palettisation. La capacité de (ré)ordonnancement est liée à la quantité de contenants de stockage pouvant être stockés temporairement dans ladite au moins une première cheminée.

Selon une caractéristique particulière de la première application, le poste de préparation de commandes comprend des moyens de lecture d'un identifiant porté par un contenant d'expédition donné venant du deuxième convoyeur aller, et le système de pilotage permet de :
- sélectionner un des emplacements de ladite au moins une deuxième cheminée, en fonction de l'identifiant lu et d'une séquence prédéterminée définissant l'ordre dans lequel les contenants d'expédition doivent sortir de ladite au moins une deuxième cheminée ;
- piloter ledit au moins un deuxième élévateur afin de faire entrer le contenant d'expédition donné dans l'emplacement sélectionné.

Ainsi, ladite au moins une deuxième cheminée permet d'effectuer un (ré)ordonnancement des contenants d'expédition.

Selon une caractéristique particulière de la première application, le système de pilotage permet de piloter ledit au moins un premier élévateur afin de laisser libre un des emplacements de ladite au moins une première cheminée et faire entrer dans l'emplacement laissé libre un contenant de stockage provenant des premiers moyens d'évacuation.

Ainsi, il est aisé de présenter plusieurs fois successivement un même contenant de stockage à l'opérateur. En effet, on utilise une boucle passant par ladite au moins une première cheminée. Ceci permet d'avoir un intervalle de temps court entre deux présentations successives du même contenant de stockage à l'opérateur (donc pas de nécessité de faire sortir du magasin de stockage deux contenants de stockage qui contiennent le même type de produits, et donc pas d'augmentation du nombre de mouvements effectués par le magasin de stockage et pas d'augmentation du nombre d'allées du magasin de stockage).

Avantageusement, le poste de préparation de commandes comprend au moins une première structure de stockage tampon comprenant des emplacements fixes pouvant chacun recevoir au moins un contenant de stockage, et le système de pilotage permet de piloter ledit au moins un premier élévateur afin de stocker temporairement des contenants de stockage dans ladite au moins une première structure de stockage tampon.

Ainsi, ladite au moins une première structure de stockage tampon (aussi appelée « rack » par la suite) permet d'augmenter la capacité de stockage tampon, en amont de ladite au moins une première cheminée (et donc la capacité de (ré)ordonnancement des contenants de stockage) et/ou en aval de ladite au moins une première cheminée (et donc la capacité de présentations successives de mêmes contenants de stockage à l'opérateur).

Selon une caractéristique particulière, chaque élévateur peut transporter au moins deux contenants côte à côte et/ou au moins deux contenants superposés. Ainsi, on optimise l'utilisation de chaque élévateur et on augmente le débit de contenants.

Selon une caractéristique particulière, au moins une cheminée coopère avec au moins deux élévateurs. Ainsi, on optimise l'utilisation de cette cheminée.

Selon une caractéristique particulière, au moins un élévateur coopère avec au moins deux cheminées. Ainsi, on optimise l'utilisation de cet élévateur.

Selon une caractéristique particulière de la première application, parmi ladite au moins une première cheminée et ladite au moins une deuxième cheminée, au moins une cheminée partagée reçoit des contenants de stockage et des contenants d'expédition. En outre, le système de pilotage permet de piloter les premiers et deuxièmes moyens de présentation afin qu'ils coopèrent pour présenter à l'opérateur ou l'automate des contenants de stockage et des contenants d'expédition sortant de ladite au moins une cheminée partagée.

Ainsi, une cheminée partagée est utilisée à la fois pour des contenants de stockage et des contenants d'expédition, ce qui permet d'optimiser son utilisation (par exemple dans le cas où le débit en contenants de stockage est beaucoup plus élevé que le débit en contenants d'expédition, ou inversement).

Dans un mode de réalisation particulier, au moins une cheminée comprend deux courroies crantées équipées de taquets synchronisés. Ce mode de réalisation est simple à mettre en oeuvre et peu coûteux.

Avantageusement, chaque convoyeur (convoyeur aller, convoyeur retour) est placé dans une position aérienne, à au moins deux mètres du sol. Ainsi, on réduit l'emprise au sol du poste de préparation de commandes.

Selon une caractéristique particulière de la première application, le système de pilotage permet de piloter les premiers moyens de présentation afin qu'ils forment un premier carrousel de circulation de contenants de stockage, permettant de présenter à l'opérateur ou l'automate au moins deux fois un contenant de stockage donné, sans faire repasser ledit contenant de stockage donné par ladite au moins une première cheminée.

Ainsi, on dispose d'une possibilité supplémentaire (outre celle offerte par une réintroduction d'un contenant de stockage dans ladite au moins une cheminée), pour présenter plusieurs fois successivement un même contenant de stockage à l'opérateur. Ceci permet d'avoir un intervalle de temps très court entre deux présentations successives du même contenant de stockage à l'opérateur (donc pas de nécessité de faire sortir du magasin de stockage deux contenants de stockage qui contiennent le même type de produits, et donc pas d'augmentation du nombre de mouvements effectués par le magasin de stockage et pas d'augmentation du nombre d'allées du magasin de stockage).

Selon une caractéristique particulière de la première application, le système de pilotage permet de piloter les deuxièmes moyens de présentation afin qu'ils forment un deuxième carrousel de circulation de contenants d'expédition, permettant de présenter à l'opérateur ou l'automate au moins deux fois un contenant d'expédition donné, sans faire repasser ledit contenant d'expédition donné par ladite au moins une deuxième cheminée.

Ainsi, on peut présenter plusieurs fois successivement un même contenant d'expédition à l'opérateur.

Dans un mode de réalisation particulier, le système de pilotage permet d'adopter un mode de préparation de commandes appartenant au groupe comprenant :
- un premier mode dans lequel pour un même contenant d'expédition présenté à l'opérateur ou l'automate, le premier carrousel permet de présenter à l'opérateur ou l'automate plusieurs contenants de stockage successivement ;
- un deuxième mode dans lequel pour un même contenant de stockage présenté à l'opérateur ou l'automate, le deuxième carrousel permet de présenter à l'opérateur ou l'automate plusieurs contenants d'expédition successivement ;
- un troisième mode dans lequel, pour un couple de contenant de stockage et de contenant d'expédition donnés, le premier carrousel permet de présenter à l'opérateur ou l'automate le contenant de stockage donné et le deuxième carrousel permet de présenter à l'opérateur ou l'automate le contenant d'expédition donné.

Il est également proposé un système de stockage automatisé comprenant un magasin de stockage et au moins un poste de préparation de commandes tel que précité (dans l'un quelconque des modes de réalisation).

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente une vue de dessus d'un système de stockage automatisé comprenant des postes de préparation de commandes classiques, dans lesquels la fonction d'accumulation est réalisée avec un ensemble de convoyeurs horizontaux ;
- la figure 2 présente une vue de dessus d'un système de stockage automatisé comprenant des postes de préparation de commandes selon un premier mode de réalisation de l'invention ;
- les figures 3A et 3B présentent des vues, en perspective et de dessus respectivement, d'un des postes de préparation de commandes de la figure 2, selon le premier mode de réalisation de l'invention ;
- les figures 4A à 4H illustrent le fonctionnement du poste de préparation de commandes des figures 3A et 3B ;
- la figure 5 présente un mode de réalisation particulier de chacune des cheminées comprises dans le poste de préparation de commandes des figures 3A et 3B ;
- la figure 6 illustre la réalisation de carrousels de circulation de contenants, au sein du poste de préparation de commandes des figures 3A et 3B ;
- les figures 7A et 7B présentent une vue en perspective complète et une vue de dessus partielle d'un poste de préparation de commandes selon un deuxième mode de réalisation de l'invention ;
- les figures 8A et 8B présentent une vue en perspective complète et une vue de dessus partielle d'un poste de préparation de commandes selon un troisième mode de réalisation de l'invention ;
- les figures 9A et 9B présentent une vue en perspective partielle et une vue de dessus partielle d'un poste de préparation de commandes selon un quatrième mode de réalisation de l'invention ; et
- la figure 10 présente une vue en perspective d'un poste de préparation de commandes selon un cinquième mode de réalisation de l'invention.

### 5. DESCRIPTION DÉTAILLÉE

Sur toutes les figures du présent document, les éléments et étapes identiques sont désignés par une même référence numérique.

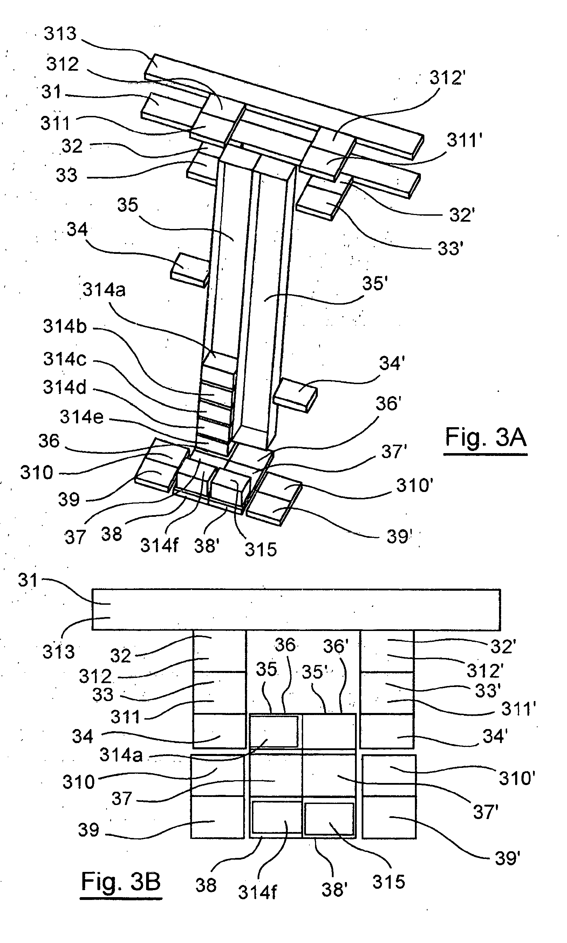

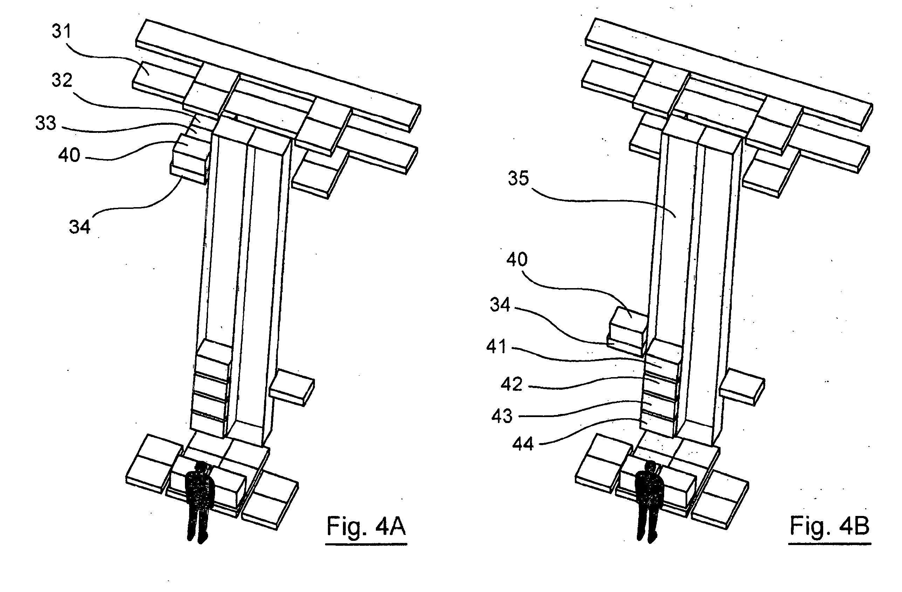

La **figure 2** présente une vue de dessus d'un système de stockage automatisé identique à celui de la figure 1, à l'exception notamment des postes de préparation de commandes (qui sont classiques dans la figure 1 et selon un premier mode de réalisation de l'invention dans la figure 2). Sur la figure 2 on retrouve donc le magasin de stockage 7 et l'ensemble de convoyeurs (comprenant les trois sous-ensembles référencés 8, 9 et 6, qui amènent les contenants de stockage depuis le magasin jusqu'aux postes de préparation, et réciproquement). Les postes de préparation de commandes selon le premier mode de réalisation de l'invention sont référencés 20a, 20b, 20c, 20d, 20e et 20f. Ils sont occupés chacun par un opérateur 1a, 1b, 1c, 1d, 1e et 1f et sont reliés aux convoyeurs du troisième sous-ensemble 8. La structure et le fonctionnement de ces postes de préparation sont décrits en détails ci-après, en relation avec les figures 3A, 3B et 4A à 4H. Dans l'exemple de la figure 2, la surface nécessaire pour les six postes de préparation de commandes selon l'invention est de l'ordre de 42 m². Soit un gain de 58% d'emprise au sol, en comparaison des 100 m² nécessaires pour les six postes de préparation de commandes classiques de la figure 1.

Dans l'exemple illustré sur la figure 2, afin de réduire encore l'emprise au sol des postes de préparation, il y a une mise en commun de certains éléments (liés par exemple au retour des contenants de stockage vers le magasin de stockage) entre deux postes voisins (cas des paires de postes adjacents référencés (20a, 20b), (20c, 20d) et (20e, 20f)). Dans ce cas, les deux postes adjacents d'une des paires précitées sont configurés de manière symétrique l'un par rapport à l'autre, la partie commune formant un axe de symétrie.

Comme illustré sur les **figures 3A et 3B**, dans le premier mode de réalisation de l'invention, un poste de préparation de commandes comprend deux circuits : le premier pour les contenants de stockage et le deuxième pour les contenants d'expédition. Les deux circuits sont synchronisés et commandés par le système informatique de gestion central (non illustré) (aussi appelé système de pilotage), ayant en charge le pilotage de l'ensemble du système de stockage automatisé.

Le premier circuit, pour les contenants de stockage, est représenté sur la partie gauche des figures 3A et 3B et comprend :
- un convoyeur aller 31, recevant des contenants de stockage venant du magasin de stockage 7 ;
- une base d'entrée 32, équipée d'un convoyeur à rouleaux motorisés. Elle reçoit des contenants arrivant du convoyeur aller 31 ;
- une base de tampon après entrée 33, équipée d'un convoyeur à rouleaux motorisés. Elle reçoit des contenants de stockage venant de la base d'entrée 32 ;
- un élévateur 34 ;
- une cheminée 35, recevant grâce à l'élévateur 34 des contenants de stockage venant de la base de tampon après entrée 33. Sur la figure 3A, quatre contenants de stockage référencés 314a à 314d se trouvent dans la cheminée ;
- une base de réception 36, équipée d'un convoyeur à rouleaux motorisés, combiné avec un système de transfert vertical indépendant ou utilisant la technologie de la cheminée 35. Elle reçoit des contenants de stockage sortant de la cheminée 35. Sur la figure 3A, un contenant de stockage référencé 314e se trouve sur la base de réception 36 ;
- une base de tampon avant présentation 37, équipée d'un convoyeur à rouleaux motorisés. Elle reçoit des contenants de stockage venant de la base de réception 36 ;
- une base de présentation 38, équipée d'un convoyeur à rouleaux motorisés, combiné avec un système de transfert latéral vers une base de tampon avant évacuation 39. Elle reçoit des contenants de stockage venant de la base de tampon avant présentation 37, et les présente à l'opérateur (sur la figure 3A, un contenant de stockage référencé 314f se trouve sur la base de présentation 38). Elle possède par exemple une hauteur de plan de roulement (HPR) égale à 750 mm ;
- une base de tampon avant évacuation 39, équipée d'un convoyeur à rouleaux motorisés. Elle reçoit des contenants de stockage venant de la base de présentation 38 ;
- une base d'évacuation 310, équipée d'un convoyeur à rouleaux motorisés. Elle reçoit des contenants de stockage venant de la base de tampon avant évacuation 39 ;
- une base de tampon avant sortie 311, équipée d'un convoyeur à rouleaux motorisés. Elle reçoit, grâce à l'élévateur 34, des contenants de stockage venant de la base d'évacuation 310 ;
- une base de sortie 312, équipée d'un convoyeur à rouleaux motorisés. Elle reçoit des contenants de stockage venant de la base de tampon avant sortie 311;
- un convoyeur retour 313, recevant des contenants de stockage venant de la base de sortie 312 et les retournant vers le magasin de stockage 7.

Les convoyeurs aller 31 et retour 313 font par exemple partie des convoyeurs du troisième sous-ensemble 8. Ils sont placés dans une position aérienne fonction du besoin (par exemple à au moins deux mètres du sol), afin de ne pas gêner les déplacements de personnes et de matériels, et faciliter les différentes opérations de maintenance (maintenance des convoyeurs eux-mêmes et/ou maintenance des chariots utilisés dans le magasin de stockage).

L'élévateur 34 est par exemple un élévateur alternatif à mouvements combinés, équipé d'un convoyeur à rouleaux motorisés combiné à un système de transfert (basé par exemple sur une technologie de type bras télescopique) permettant de positionner les contenants de stockage dans la cheminée.

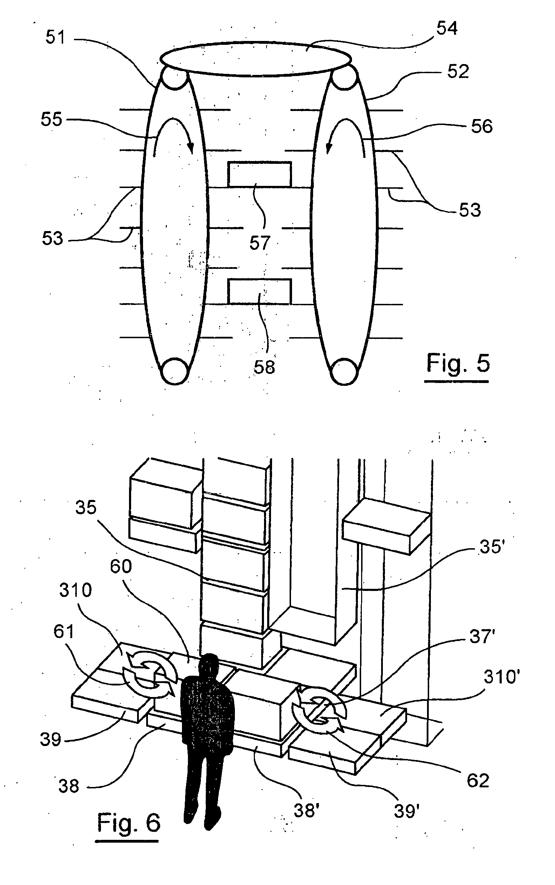

La cheminée 35 forme un moyen d'accumulation verticale et de distribution séquencée (pas à pas) de contenants de stockage. Dans l'exemple des figures 3A et 3B, elle comprend des emplacements mobiles superposés, pouvant chacun recevoir et déplacer vers le bas un contenant de stockage. Un mode de réalisation particulier de cette cheminée est décrit ci-après en relation avec la figure 5.

Le deuxième circuit, pour les contenants d'expédition, est représenté sur la partie droite des figures 3A et 3B.

Dans l'exemple présenté, le deuxième circuit est symétrique au premier circuit et les convoyeurs aller 31 et retour 313 sont communs aux premier et deuxième circuits.

Dans une variante de réalisation, les convoyeurs aller et retour peuvent être dédoublés pour des raisons de flux. Les convoyeurs aller et retour du deuxième circuit (pour les contenants d'expédition) sont alors distincts des convoyeurs aller et retour du premier circuit (pour les contenants de stockage).

Dans l'exemple des figures 3A et 3B, le deuxième circuit comprend, outre les convoyeurs aller 31 et retour 313, les éléments suivants : une base d'entrée 32', une base de tampon après entrée 33', un élévateur 34', une cheminée 35' (sur la figure 3A, aucun contenant d'expédition ne se trouve dans la cheminée 35' du deuxième circuit), une base de réception 36', une base de tampon avant présentation 37', une base de présentation 38' (sur la figure 3A, un contenant d'expédition référencé 315 se trouve sur la base de présentation 38' du deuxième circuit), une base de tampon avant évacuation 39', une base d'évacuation 310', une base de tampon avant sortie 311' et une base de sortie 312'. Ces éléments du deuxième circuit ne sont pas décrits plus en détail puisqu'ils sont identiques à ceux du premier circuit, hormis le fait qu'ils sont utilisés pour les contenants d'expédition au lieu des contenants de stockage.

Optionnellement, la base de présentation 38 du premier circuit est équipée d'un système de contrôle pondéral, permettant de contrôler que l'opérateur a prélevé les bons produits (et dans la bonne quantité) dans le contenant de stockage présent sur cette base de présentation 38. De même, optionnellement, la base de présentation 38' du deuxième circuit est équipée d'un système de contrôle pondéral, permettant de contrôler que l'opérateur a placé les bons produits (et dans la bonne quantité) dans le contenant d'expédition présent sur cette base de présentation 38'.

Dans le premier mode de réalisation illustré sur les figures 3A et 3B, les deux circuits (l'un pour les contenants de stockage et l'autre pour les contenants d'expédition) sont symétriques l'un de l'autre et chaque circuit comprend un seul élévateur, qui est mono-charge (c'est-à-dire qui transporte un seul contenant), et une seule cheminée. D'autres modes de réalisation peuvent être envisagés sans sortir du cadre de la présente invention. On peut notamment prévoir :
- de mettre en oeuvre l'invention dans un seul circuit (c'est-à-dire uniquement pour les contenants de stockage ou pour les contenants d'expédition). Dans ce cas, l'autre circuit est réalisé de manière classique ;
- d'utiliser deux (ou plus) cheminées pour un circuit donné. On augmente ainsi le nombre d'emplacements tampon, et donc le nombre de contenant pouvant être accumulés avant présentation à l'opérateur ;
- de faire coopérer deux (ou plus) élévateurs avec une même cheminée, au sein d'un circuit donné. On augmente ainsi les cadences d'entrée/sortie de contenants de cette cheminée ;
- de faire coopérer deux (ou plus) cheminées avec un même élévateur, les cheminées appartenant au même circuit ou à différents circuits. Ainsi, on réduit le nombre d'élévateur compris dans le poste de préparation ;
- d'utiliser (au moins) une cheminée commune aux deux circuits (c'est-à-dire une cheminée par laquelle transitent des contenants de stockage et des contenants d'expédition). Ainsi, on optimise l'utilisation de cette cheminée. En reprenant l'exemple des figures 3A et 3B, si la cheminée 35' du deuxième circuit est aussi utilisée pour stocker des contenants de stockage, alors la base de tampon avant présentation 37' du deuxième circuit est par exemple équipée d'un système de transfert latéral vers la base de tampon avant présentation 37 du premier circuit, de sorte que le système de pilotage puisse présenter à l'opérateur (sur la base de présentation 38 du premier circuit) un contenant de stockage venant de la cheminée 35' du deuxième circuit. Inversement, la cheminée 35 du premier circuit peut aussi être utilisée pour stocker des contenants d'expédition ;
- d'utiliser au moins un élévateur pouvant déplacer simultanément plusieurs contenants. On réduit ainsi le nombre de déplacement de l'élévateur. Par exemple plusieurs contenants sont adjacents horizontalement (élévateur à un niveau) et/ou plusieurs contenants sont adjacents verticalement (élévateur à plusieurs niveaux) ;
- d'adapter le nombre d'emplacements superposés de chaque cheminée en fonction de la quantité de contenants à accumuler (verticalement) avant distribution séquencée à l'opérateur ;
- d'adapter le nombre de contenants pouvant être stockés dans chaque emplacement de cheminée.

On présente maintenant, en relation avec les **figures 4A à 4H** le fonctionnement du poste de préparation de commandes des figures 3A et 3B. Plus précisément, on décrit le fonctionnement du premier circuit (pour les contenants de stockage), à travers le trajet suivi par un contenant de stockage référencé 40. Le fonctionnement du deuxième circuit (pour les contenants d'expédition) n'est pas détaillé puisqu'il fonctionne comme le premier circuit (ces deux circuits sont symétriques l'un de l'autre et comprennent des éléments identiques).

Sur la figure 4A, le contenant 40 est présent sur l'élévateur 34, qui est en position en regard de la base de tampon après entrée 33. On suppose que le contenant 40 est préalablement arrivé par le convoyeur aller 31 (en provenance du magasin de stockage 7) et est passé par la base d'entrée 32 puis la base de tampon après entrée 33.

Sur la figure 4B, l'élévateur 34 est descendu et se trouve en position en regard d'un emplacement libre de la cheminée 35 (dans cet exemple, il s'agit de l'emplacement occupant la cinquième position en partant du bas, les emplacements situés aux quatre positions les plus basses étant occupés par des contenants référencés 41 à 44 respectivement). C'est le système de pilotage qui gère l'utilisation des emplacements de la cheminée 35. Par exemple, la base d'entrée 32 (ou la base de tampon après entrée 33) est équipée d'un système de lecture d'un identifiant porté par un contenant de stockage présent sur cette base (et venant du convoyeur aller 31). Quand il reçoit l'identifiant lu par ce système de lecture, le système de pilotage sélectionne un des emplacements libres de la cheminée 35, en fonction de l'identifiant lu et d'une séquence prédéterminée définissant l'ordre dans lequel les contenants de stockage doivent sortir de la cheminée 35, cette séquence prédéterminée pouvant être ou non recalculée au cours de l'acheminement des contenants.

Puis le système de pilotage pilote l'élévateur 34 afin de faire entrer cet contenant de stockage donné dans l'emplacement sélectionné.

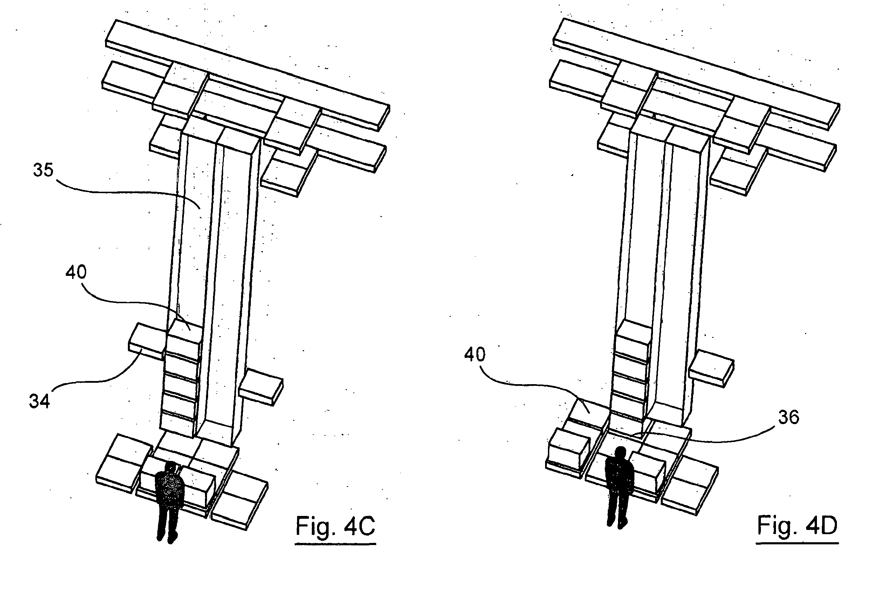

Sur la figure 4C, le contenant 40 a été chargé dans la cheminée 35 (dans l'emplacement libre auparavant et occupant la cinquième position en partant du bas).

Sur la figure 4D, le contenant 40 est sorti de la cheminée 35 et est présent sur la base de réception 36. Cela s'est fait en cinq pas : dans les quatre premiers pas, l'emplacement occupé par le contenant 40 est passé, dans la cheminée 35, de la cinquième à la première position en partant du bas ; puis dans le cinquième pas, le contenant 40 est sorti de cet emplacement et a été placé sur la base de réception 36.

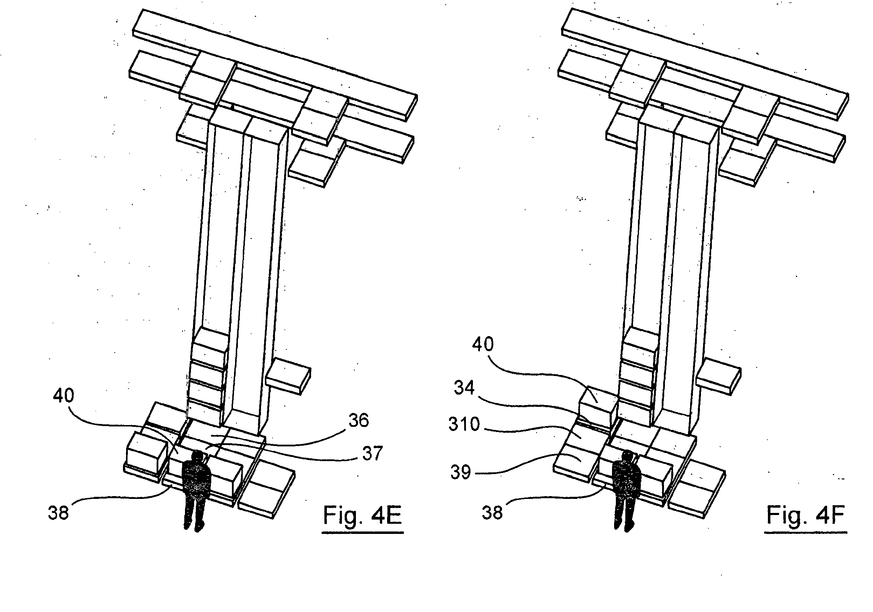

Sur la figure 4E, le contenant 40 est présent sur la base de présentation 38. Il est préalablement passé par la base de tampon avant présentation 37.

Sur la figure 4F, le contenant 40 est présent sur l'élévateur 34. Il est préalablement passé par la base de tampon avant évacuation 39 puis la base d'évacuation 310.

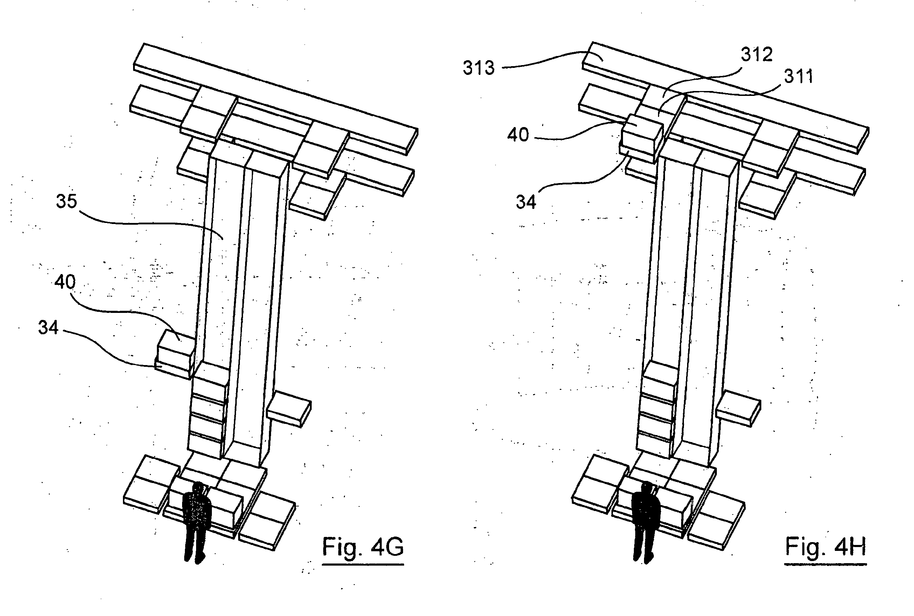

Deux cas sont ensuite possibles, correspondant respectivement aux figures 4G et 4H.

Sur la figure 4G (cas d'un repositionnement en séquence), le contenant 40 est présent sur l'élévateur 34, qui est en position en regard d'un emplacement libre de la cheminée 35, afin que le contenant 40 y soit repositionné (dans cet exemple, il s'agit à nouveau de l'emplacement occupant la cinquième position en partant du bas). C'est le système de pilotage qui gère l'utilisation des emplacements de la cheminée 35, et permet d'en laisser certains volontairement libres afin de pouvoir y repositionner (en séquence) un contenant après qu'il a été présenté à l'opérateur.

Sur la figure 4H (cas d'un retour dans le magasin de stockage), le contenant 40 est présent sur l'élévateur 34, qui est en position en regard de la base de tampon avant sortie 311, afin que le contenant 40 y soit placé puis passe par la base de sortie 312 avant de repartir par le convoyeur retour 313 (vers le magasin de stockage 7).

On présente maintenant, en relation avec la **figure 5**, un mode de réalisation particulier d'une des cheminées (par exemple celle référencée 35) comprises dans le poste de préparation de commandes des figures 3A et 3B. La cheminée 35 comprend deux courroies crantées 51, 52 équipées de taquets 53 et entraînées simultanément en rotation selon le sens des flèches référencées 55 et 56. Elle comprend également un système 54 de synchronisation des taquets 53 des deux courroies. Dans la phase de descente des taquets, chaque paire de taquets se faisant face (montés chacun sur l'une des deux courroies) forme un emplacement de la cheminée. Cet emplacement est donc mobile du haut vers le bas de la cheminée, par exemple par pas de 500 mm. Dans cet emplacement, il est possible de placer un contenant 57, 58 venant de l'élévateur 34. Quand ils arrivent en bas de la cheminée, les taquets d'une paire s'écartent l'un de l'autre, libérant ainsi (sur la base de réception 36) le contenant qu'ils portaient.

D'autres modes de réalisation de la cheminée peuvent être envisagés sans sortir du cadre de la présente invention. On peut notamment prévoir un système de déplacement vertical de nacelles rigides (correspondant chacune à un emplacement de la cheminée).

Comme illustré sur la **figure 6**, dans une variante de l'invention, on réalise des carrousels de circulation de contenants, au sein du poste de préparation de commandes des figures 3A et 3B.

Pour réaliser un premier carrousel de circulation de contenants de stockage, le système de pilotage commande de manière adéquate les mécanismes de déplacement de contenant (convoyeur à rouleaux motorisés et éventuellement système de transfert latéral) dont sont équipés les éléments suivants du premier circuit (utilisé pour les contenants de stockage) : la base de tampon avant présentation 37 (sur la figure 6, elle est cachée par le contenant référencé 60), la base de présentation 38, la base de tampon avant évacuation 39 et la base d'évacuation 310. Ce premier carrousel permet par exemple de faire tourner des contenants de stockage selon le sens de la flèche référencée 61. Dans une variante, la rotation se fait dans le sens inverse. Dans une autre variante, on utilise les deux sens de rotation. Ce premier carrousel permet de présenter à l'opérateur (ou à un automate) plusieurs fois un contenant de stockage donné 60, sans le faire repasser par la cheminée 35.

Pour réaliser un deuxième carrousel de circulation de contenants d'expédition, le système de pilotage commande de manière adéquate les mécanismes de déplacement de contenant (convoyeur à rouleaux motorisés et éventuellement système de transfert latéral) dont sont équipés les éléments suivants du deuxième circuit (utilisé pour les contenants d'expédition) : la base de tampon avant présentation 37', la base de présentation 38', la base de tampon avant évacuation 39' et la base d'évacuation 310'. Ce deuxième carrousel permet par exemple de faire tourner des contenants d'expédition selon le sens de la flèche référencée 62. Dans une variante, la rotation se fait dans le sens inverse. Dans une autre variante, on utilise les deux sens de rotation. Ce deuxième carrousel permet de présenter à l'opérateur (ou à un automate) plusieurs fois un contenant d'expédition donné 63, sans le faire repasser par la cheminée 35'.

Selon que chacun de ces premier et deuxième carrousels est utilisé ou non par le système de pilotage, divers modes de préparation de commandes sont possibles, et notamment les modes de préparation de type « un pour un » suivants (un contenant de stockage et un contenant d'expédition sont présentés simultanément à l'opérateur) :
- un premier mode dans lequel pour un contenant d'expédition donné présenté à l'opérateur, le premier carrousel permet (en faisant tourner les contenants de stockage, dans lesquels se trouvent les produits à prélever par l'opérateur) de présenter à l'opérateur plusieurs contenants de stockage successivement. Par exemple, un contenant de stockage est présenté pour chaque ligne de la liste de commandes associée à ce contenant d'expédition donné ;
- un deuxième mode dans lequel pour un contenant de stockage donné présenté à l'opérateur, le deuxième carrousel permet (en faisant tourner les contenants d'expédition, dans lesquels doivent être placés les produits prélevés par l'opérateur) de présenter à l'opérateur plusieurs contenants d'expédition successivement. Par exemple, en même temps que ce contenant de stockage donné, on présente successivement plusieurs contenants d'expédition associés chacun à une liste de commande dont une ligne se rapporte à un type produit présent dans le contenant de stockage donné ;
- un troisième mode dans lequel, pour un couple de contenant de stockage et de contenant d'expédition donnés, le premier carrousel permet (en faisant tourner les contenants de stockage) de présenter à l'opérateur le contenant de stockage donné et le deuxième carrousel permet (en faisant tourner les contenants d'expédition) de présenter à l'opérateur le contenant d'expédition donné.

De façon classique, le carnet de commandes comprend une pluralité de listes de commandes, chaque liste étant associée à un contenant d'expédition. Chaque ligne associe :
- un numéro de commande (correspondant à la liste à laquelle appartient cette ligne, et donc à un contenant d'expédition),
- un numéro de référence (correspondant à un contenant de stockage stockant le type de produit souhaité) et
- une quantité (correspondant à un nombre de produits du type souhaité à prélever).

Pour la mise en oeuvre du premier mode, le système de pilotage effectue une réorganisation des lignes du carnet de commandes, consistant, dans une première étape, à trier ces lignes par le numéro de commande. Ainsi, après réorganisation, toutes les lignes ayant le même numéro de commande seront à la suite (ce qui permet bien de faire tourner les contenants de stockage pour un même contenant d'expédition). Optionnellement, la réorganisation comprend une deuxième étape consistant, tout en gardant le regroupement des lignes par le numéro de commande, à placer à la suite deux lignes ayant des numéros de commande différents mais le même numéro de référence (ceci permet de réduire le nombre de mouvements des contenants de stockage).

Le tableau A ci-dessous présente un exemple de carnet de commandes après la première étape de réorganisation pour la mise en oeuvre du premier mode.

| Numéro de ligne | Numéro de référence | Numéro de commande | Quantité |
|---|---|---|---|
| 21 | 12 | 8 | 2 |
| 20 | 12 | 7 | 1 |
| 19 | 4 | 7 | 5 |
| 18 | 1 | 6 | 4 |
| 17 | 4 | 6 | 4 |
| 16 | 5 | 6 | 5 |
| 15 | 9 | 6 | 5 |
| 14 | 13 | 6 | 1 |
| 13 | 13 | 5 | 4 |
| 12 | 1 | 5 | 4 |
| 11 | 6 | 5 | 5 |
| 10 | 11 | 5 | 1 |
| 9 | 5 | 5 | 5 |
| 8 | 2 | 4 | 1 |
| 7 | 5 | 4 | 3 |
| 6 | 8 | 4 | 5 |
| 5 | 15 | 3 | 4 |
| 4 | 14 | 3 | 3 |
| 3 | 7 | 2 | 1 |
| 2 | 1 | 2 | 1 |
| 1 | 11 | 1 | 3 |

Le tableau B ci-dessous présente un exemple de carnet de commandes après la deuxième étape de réorganisation pour la mise en oeuvre du premier mode (la colonne « quantité » n'est pas renseignée).

| Numéro de ligne | Numéro de référence | Numéro de commande | Quantité |
|---|---|---|---|
| 21 | 12 | 8 | |
| 19 | 12 | 7 | |
| 20 | 4 | 7 | |
| 17 | 4 | 6 | |
| 18 | 1 | 6 | |
| 16 | 5 | 6 | |
| 14 | 9 | 6 | |
| 15 | 13 | 6 | |
| 13 | 13 | 5 | |
| 11 | 6 | 5 | |
| 10 | 11 | 5 | |
| 9 | 5 | 5 | |
| 12 | 1 | 5 | |
| 2 | 1 | 2 | |
| 3 | 7 | 2 | |
| 7 | 5 | 4 | |
| 8 | 2 | 4 | |
| 6 | 8 | 4 | |
| 5 | 15 | 3 | |
| 4 | 14 | 3 | |
| 1 | 11 | 1 | |

Pour la mise en oeuvre du deuxième mode, le système de pilotage effectue une réorganisation des lignes du carnet de commandes, consistant à trier ces lignes par le numéro de référence (puisque l'objectif est de faire tourner les contenants d'expédition pour un même contenant de stockage). Ainsi, après réorganisation, toutes les lignes ayant le même numéro de référence seront à la suite.

Le tableau C ci-dessous présente un exemple de carnet de commandes après la réorganisation pour la mise en oeuvre du deuxième mode (la colonne « quantité » n'est pas renseignée).

| Numéro de ligne | Numéro de référence | Numéro de commande | Quantité |
|---|---|---|---|
| 18 | 1 | 2 | |
| 12 | 1 | 5 | |
| 2 | 1 | 6 | |
| 8 | 2 | 4 | |
| 19 | 4 | 6 | |
| 17 | 4 | 7 | |
| 16 | 5 | 4 | |
| 9 | 5 | 5 | |
| 7 | 5 | 6 | |
| 11 | 6 | 5 | |
| 3 | 7 | 2 | |
| 6 | 8 | 4 | |
| 15 | 9 | 6 | |
| 10 | 11 | 1 | |
| 1 | 11 | 5 | |
| 21 | 12 | 7 | |
| 20 | 12 | 8 | |
| 14 | 13 | 5 | |
| 13 | 13 | 6 | |
| 4 | 14 | 3 | |
| 5 | 15 | 3 | |

Optionnellement, le système de pilotage peut basculer dynamiquement d'un mode de préparation de commandes à l'autre. Ce qui précède peut être transposé au cas où un opérateur est remplacé par un automate.

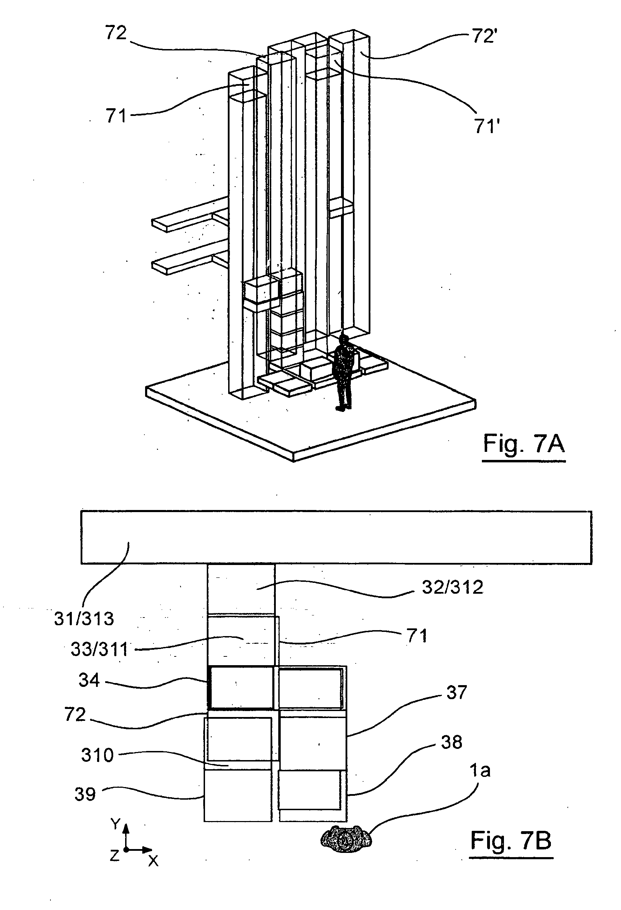

On présente maintenant, en relation avec les **figures 7A et 7B**, un poste de préparation de commandes selon un deuxième mode de réalisation de l'invention. La figure 7A est complète, les premier et second circuits étant représentés (l'un à gauche, pour les contenants de stockage, et l'autre à droite, pour les contenants d'expédition). La figure 7B est partielle, seul le premier circuit étant représenté (à gauche). Ce deuxième mode de réalisation se distingue du premier (présentés sur les figures 3A et 3B) uniquement en ce que :
- chaque circuit comprend en outre deux structures de stockage tampon (« racks ») (référencés 71 et 72 pour le premier circuit, 71' et 72' pour le second circuit) comprenant des emplacements fixes pouvant chacun recevoir un contenant de stockage ; et
- le système de pilotage permet de piloter l'élévateur 34 afin de stocker temporairement des contenants de stockage dans ces structures de stockage tampon.

Chaque rack permet de mettre en attente des contenants liés à la préparation future proche. Un rack est par exemple équipé de rouleaux libres, chaînés par courroie. L'élévateur 34 est équipé d'un système d'entraînement par friction escamotable. Lors du dépôt ou retrait d'un contenant dans ou hors du rack, l'élévateur applique son système d'entraînement aux rouleaux chaînés du rack. Dans une variante, chaque emplacement du rack est équipé d'un convoyeur à rouleaux motorisés, qui est commandé par le système de pilotage lors du dépôt ou retrait d'un contenant dans ou hors du rack. Le nombre et la hauteur des racks sont choisis en fonction du besoin d'emplacements tampon.

Des variantes de ce deuxième mode de réalisation peuvent être envisagés sans sortir du cadre de la présente invention. On peut notamment utiliser un seul ou plus de deux racks.

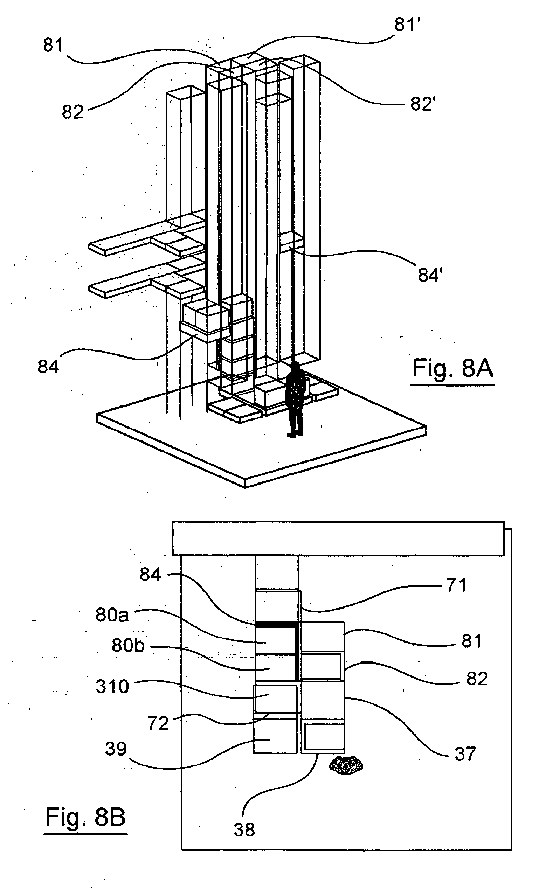

On présente maintenant, en relation avec les **figures 8A et 8B**, un poste de préparation de commandes selon un troisième mode de réalisation de l'invention. La figure 8A est complète, les premier et second circuits étant représentés (l'un à gauche, pour les contenants de stockage, et l'autre à droite, pour les contenants d'expédition). La figure 8B est partielle, seul le premier circuit étant représenté (à gauche). Ce troisième mode de réalisation se distingue du second (présentés sur les figures 7A et 7B) uniquement en ce que, dans chaque circuit, il y a deux cheminées 81,82 et 81',82' et l'élévateur 84 et 84' est à double charge. Ce dernier permet de transporter deux contenants 80a, 80b dans des positions adjacentes horizontalement. Chacune de ces positions adjacentes permet le transfert d'un contenant vers l'une des deux cheminées.

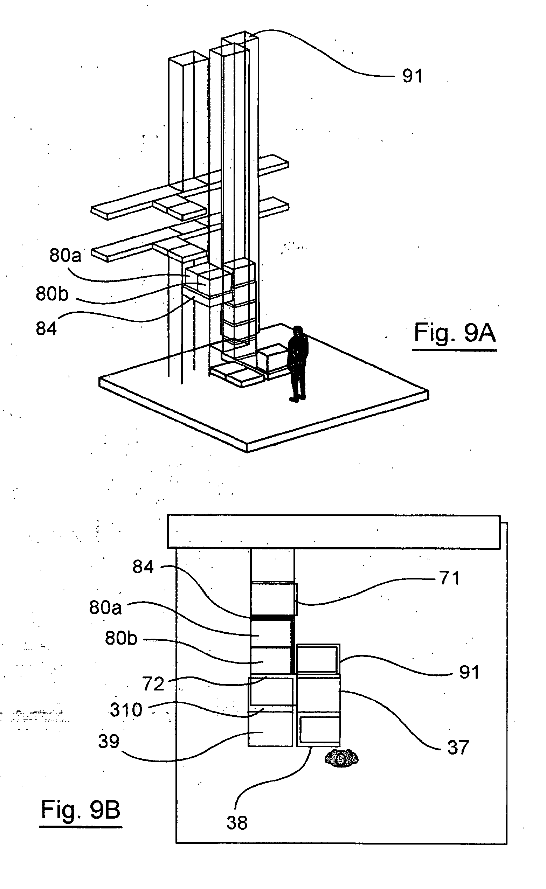

On présente maintenant, en relation avec les **figures 9A et 9B**, un poste de préparation de commandes selon un quatrième mode de réalisation de l'invention. Les figures 9A et 9B sont partielles, seul le premier circuit étant représenté (à gauche). Ce quatrième mode de réalisation se distingue du troisième (présentés sur les figures 8A et 8B) uniquement en ce que, dans chaque circuit, il y a une seule cheminée 91. L'élévateur 84 est à double charge et permet de transporter deux contenants 80a, 80b dans des positions adjacentes horizontalement. Seule l'une de ces deux positions adjacentes permet le transfert d'un contenant vers la cheminée 91. L'élévateur est équipé d'un convoyeur à rouleaux motorisés, permettant de faire passer un contenant d'une des positions adjacentes à l'autre, et ainsi pouvoir le transférer vers un emplacement de la cheminée.

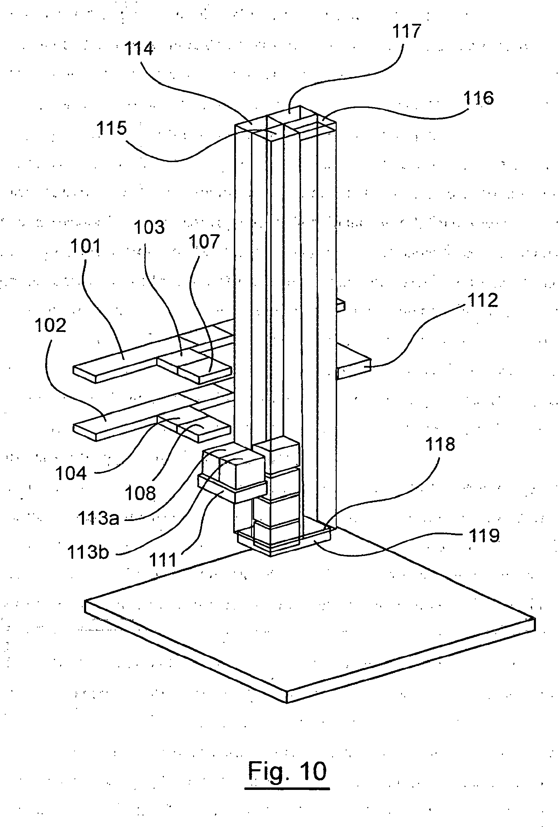

On présente maintenant, en relation avec la **figure 10**, un poste de préparation de commandes selon un cinquième mode de réalisation de l'invention, permettant une palettisation à couches (c'est-à-dire de disposer sur une palette, ou un autre support, une ou plusieurs couches de contenants de stockage). Contrairement aux autres modes de réalisation décrits ci-dessus, il n'y a pas d'opérations de prélèvement de produits dans les contenants de stockage. En effet, les contenants de stockage (dans lesquels se trouvent des produits) sont placés tels quels sur la palette, sans être ouverts.

Un premier circuit, pour les contenants de stockage, comprend :
- deux convoyeurs aller 101, 102, recevant chacun des contenants de stockage venant du magasin de stockage 7 ;
- quatre bases d'entrée (dont deux seulement sont visibles, référencées 103 et 104, les deux autres étant cachées par les cheminées), chacune étant équipée d'un convoyeur à rouleaux motorisés et recevant des contenants arrivant d'un des convoyeurs aller (il y a deux bases d'entrée par convoyeur aller) ;

- quatre bases de tampon après entrée (dont deux seulement sont visibles, référencées 107 et 108, les deux autres étant cachées par les cheminées), chacune étant équipée d'un convoyeur à rouleaux motorisés et recevant des contenants de stockage venant d'une des quatre bases d'entrée ;
- deux élévateurs 111, 112, chacun étant à double charge et permet de transporter deux contenants 113a, 113b dans des positions adjacentes horizontalement ;
- quatre cheminées 114 à 117, chacune recevant des contenants de stockage venant d'une des positions d'un des élévateurs.

Dans l'exemple illustré, les cheminées référencées 114 et 115 reçoivent des contenants de stockage grâce à l'élévateur référencé 111, tandis que les cheminées référencées 116 et 117 reçoivent des contenants de stockage grâce à l'élévateur référencé 112. Les cheminées sont par exemple du type décrit ci-dessus (voir figure 5). Chacune forme un moyen d'accumulation verticale et de distribution séquencée (pas à pas) de contenants de stockage.

Un deuxième circuit, pour les palettes, comprend :
- une base de chargement 119, comprenant un support de palette équipé d'une table élévatrice (pour descendre la palette 118 avant d'y charger une nouvelle couche de contenants de stockage), de rouleaux motorisés (pour amener une palette vide sur le support, puis l'évacuer quand elle est chargée) et d'un système de taquage (pour remettre aux cotes finales une couche de contenants de stockage chargés sur une palette, c'est-à-dire éliminer les jeux entre contenants et permettre l'utilisation normale de la palette) ;
- un moyen d'entrée (non représenté) permettant d'amener les palettes vides jusqu'à la base de chargement 119. L'arrivée des palettes vides est par exemple effectuée grâce à un système de convoyeur à palette à accumulation qui permet de mettre en attente les palettes vides ;
- un moyen de sortie (non représenté) permettant d'évacuer les palettes chargées depuis la base de chargement 119. Par exemple, lorsque la palette est constituée (c'est-à-dire chargée), elle est évacuée grâce à un convoyeur d'évacuation de palette pleine pour être acheminée dans une autre zone ou elle pourra être expédiée.

Par exemple, si on considère une palette de format standard 800x1200 mm, le poste illustré sur la figure 10 permet de charger (simultanément ou non) quatre contenants de stockage (chacun sortant de l'une des quatre cheminées 114 à 117), de format 600x400 mm, par couche.

Dans une variante, on considère toujours une palette de format standard 800x1200 mm, mais des contenants de stockage de format 300x400 mm. Chaque cheminée possède des emplacements permettant de recevoir simultanément deux contenants de stockage adjacents (soit 600x400 mm pour les deux cumulés). Chaque élévateur est à quadruple charge et permet de transporter quatre contenants de stockage dans des positions adjacentes horizontalement. Ainsi, dans cette variante, le poste permet de charger (simultanément ou non) huit contenants de stockage (sortant deux par deux de chacune des quatre cheminées) par couche.

D'autres variantes du poste de palettisation (avec cheminée(s) et élévateur(s)) peuvent envisagées sans sortir du cadre de la présente invention. Notamment, il est possible d'adapter le nombre de cheminées, le nombre d'élévateurs, le nombre de contenants pouvant être stockés dans chaque emplacement de cheminée, le nombre de contenants pouvant être transportés simultanément par chaque élévateur, etc.

## Revendications

1. Ensemble comprenant un poste de préparation de commandes piloté par un système de pilotage, le poste de préparation possédant un premier circuit comprenant un premier convoyeur aller (31), recevant des contenants de stockage de produits, et des premiers moyens d'accumulation d'une quantité déterminée de contenants de stockage reçus par le premier convoyeur aller, lesdits premiers moyens d'accumulation comprenant au moins une première cheminée (35) comprenant des emplacements mobiles superposés pouvant chacun recevoir et déplacer vers le bas au moins un contenant de stockage, ladite au moins une première cheminée formant un moyen d'accumulation verticale et de distribution séquencée de contenants de stockage préalablement placés dans les emplacements,
**caractérisé en ce que** les premiers moyens d'accumulation comprennent au moins un premier élévateur (34), apte à se déplacer verticalement le long de ladite au moins une première cheminée (35) jusqu'à chacun des emplacements de ladite au moins une première cheminée (35) ;
**en ce que** le poste de préparation comprend des moyens de lecture d'un identifiant porté par un contenant de stockage donné venant du premier convoyeur aller,
et **en ce que** le système de pilotage est adapté pour :
- sélectionner un des emplacements de ladite au moins une première cheminée, en fonction de l'identifiant lu et d'une séquence prédéterminée définissant l'ordre dans lequel les contenants de stockage doivent sortir de ladite au moins une première cheminée ;
- piloter ledit au moins un premier élévateur afin de faire entrer le contenant de stockage donné dans l'emplacement sélectionné.

2. Ensemble selon la revendication 1, **caractérisé en ce que** le premier circuit comprend en outre :
- des premiers moyens (36 à 38) de présentation, à un opérateur ou un automate, des contenants de stockage sortant de ladite au moins une première cheminée ;
- des premiers moyens (39, 310) d'évacuation, permettant de transférer vers ledit au moins un premier élévateur au moins certains des contenants de stockage après qu'ils ont été présentés à l'opérateur ou l'automate ;
- un premier convoyeur retour (313), recevant des contenants de stockage provenant des premiers moyens d'évacuation via ledit au moins un premier élévateur.

3. Ensemble selon la revendication 2, **caractérisé en ce que** le poste de préparation possède un deuxième circuit comprenant :
- un deuxième convoyeur aller (31), recevant des contenants d'expédition de produits ;
- des deuxièmes moyens d'accumulation d'une quantité déterminée de contenants d'expédition reçus par le deuxième convoyeur aller, lesdits deuxièmes moyens d'accumulation comprenant :
* au moins une deuxième cheminée (35') comprenant des emplacements mobiles superposés pouvant chacun recevoir et déplacer vers le bas au moins un contenant d'expédition, ladite au moins une deuxième cheminée formant un moyen d'accumulation verticale et de distribution séquencée de contenants d'expédition préalablement placés dans les emplacements ;
* au moins un deuxième élévateur (34'), apte à se déplacer verticalement le long de ladite au moins une deuxième cheminée (35') jusqu'à chacun des emplacements de ladite au moins une deuxième cheminée (35') ;
- des deuxièmes moyens (36' à 38') de présentation, à l'opérateur ou l'automate,
des contenants d'expédition sortant de ladite au moins une deuxième cheminée, **en ce que** le poste de préparation comprend des moyens de lecture d'un identifiant porté par un contenant d'expédition donné venant du deuxième convoyeur aller,
et **en ce que** le système de pilotage est adapté pour :
- sélectionner un des emplacements de ladite au moins une deuxième cheminée, en fonction de l'identifiant lu et d'une séquence prédéterminée définissant l'ordre dans lequel les contenants d'expédition doivent sortir de ladite au moins une deuxième cheminée ;
- piloter ledit au moins un deuxième élévateur afin de faire entrer le contenant d'expédition donné dans l'emplacement sélectionné.

4. Ensemble selon la revendication 3, **caractérisé en ce que** le deuxième circuit comprend en outre :
- des deuxièmes moyens (39', 310') d'évacuation, permettant de transférer vers ledit au moins un deuxième élévateur au moins certains des contenants d'expédition après qu'ils ont été présentés à l'opérateur ou l'automate ;
- un deuxième convoyeur retour (313), recevant des contenants d'expédition provenant des deuxièmes moyens d'évacuation via ledit au moins un deuxième élévateur.

5. Ensemble selon la revendication 1, **caractérisé en ce que** le premier circuit comprend en outre des moyens (119) de palettisation, permettant de disposer sur des palettes ou autre supports des contenants de stockage sortant de ladite au moins une première cheminée.

6. Ensemble selon l'une quelconque des revendications 2 à 5, **caractérisé en ce que** le système de pilotage est adapté pour piloter ledit au moins un premier élévateur afin de laisser libre un des emplacements de ladite au moins une première cheminée et faire entrer dans l'emplacement laissé libre un contenant de stockage provenant des premiers moyens d'évacuation.

7. Ensemble selon l'une quelconque des revendications 1 à 6, **caractérisé en ce que** le poste de préparation comprend au moins une première structure de stockage tampon (71, 72) comprenant des emplacements fixes pouvant chacun recevoir au moins un contenant de stockage, et **en ce que** le système de pilotage est adapté pour piloter ledit au moins un premier élévateur afin de stocker temporairement des contenants de stockage dans ladite au moins une première structure de stockage tampon.

8. Ensemble selon l'une quelconque des revendications 1 à 7, **caractérisé en ce que** chaque élévateur peut transporter au moins deux contenants côte à côte et/ou au moins deux contenants superposés.

9. Ensemble selon l'une quelconque des revendications 1 à 8, **caractérisé en ce que** au moins une cheminée coopère avec au moins deux élévateurs.

10. Ensemble selon l'une quelconque des revendications 1 à 9, **caractérisé en ce que** au moins un élévateur coopère avec au moins deux cheminées.

11. Ensemble selon l'une quelconque des revendications 3 et 4, **caractérisé en ce que** parmi ladite au moins une première cheminée et ladite au moins une deuxième cheminée, au moins une cheminée partagée reçoit des contenants de stockage et des contenants d'expédition,
et **en ce que** le système de pilotage est adapté pour piloter les premiers et deuxièmes moyens de présentation afin qu'ils coopèrent pour présenter à l'opérateur ou l'automate des contenants de stockage et des contenants d'expédition sortant de ladite au moins une cheminée partagée.

12. Ensemble selon l'une quelconque des revendications 1 à 10, **caractérisé en ce que** au moins une cheminée comprend deux courroies crantées (51, 52) équipées de taquets synchronisés (53).

13. Ensemble selon l'une quelconque des revendications 1 à 12, **caractérisé en ce que** chaque convoyeur (31, 313) est placé dans une position aérienne, à au moins deux mètres du sol.

14. Ensemble selon l'une quelconque des revendications 2 à 4, **caractérisé en ce que** le système de pilotage est adapté pour piloter les premiers moyens de présentation afin qu'ils forment un premier carrousel (61) de circulation de contenants de stockage, permettant de présenter à l'opérateur ou l'automate au moins deux fois un contenant de stockage donné, sans faire repasser ledit contenant de stockage donné par ladite au moins une première cheminée.

15. Ensemble selon l'une quelconque des revendications 3 et 4, **caractérisé en ce que** le système de pilotage est adapté pour piloter les deuxièmes moyens de présentation afin qu'ils forment un deuxième carrousel (62) de circulation de contenants d'expédition, permettant de présenter à l'opérateur ou l'automate au moins deux fois un contenant d'expédition donné, sans faire repasser ledit contenant d'expédition donné par ladite au moins une deuxième cheminée.

16. Ensemble selon les revendications 14 et 15, **caractérisé en ce que** le système de pilotage est adapté pour adopter un mode de préparation de commandes appartenant au groupe comprenant :
- un premier mode dans lequel pour un même contenant d'expédition présenté à l'opérateur ou l'automate, le premier carrousel permet de présenter à l'opérateur ou l'automate plusieurs contenants de stockage successivement ;
- un deuxième mode dans lequel pour un même contenant de stockage présenté à l'opérateur ou l'automate, le deuxième carrousel permet de présenter à l'opérateur ou l'automate plusieurs contenants d'expédition successivement ;
- un troisième mode dans lequel, pour un couple de contenant de stockage et de contenant d'expédition donnés, le premier carrousel permet de présenter à l'opérateur ou l'automate le contenant de stockage donné et le deuxième carrousel permet de présenter à l'opérateur ou l'automate le contenant d'expédition donné.

17. Système de stockage automatisé, **caractérisé en ce qu'**il comprend un magasin de stockage (7) et au moins un ensemble selon l'une quelconque des revendications 1 à 16.

## Patentansprüche

1. Vorrichtung, umfassend eine Vorbereitungsstelle für Aufträge, die von einem Steuersystem gesteuert wird, wobei die Vorbereitungsstelle eine Schaltung besitzt, umfassend einen ersten Hinförderer (31), der Speicherinhalte von Produkten aufnimmt, und erste Mittel zum Speichern einer bestimmten Menge von Speicherinhalten, die von dem ersten Hinförderer aufgenommen werden, wobei die ersten Speichermittel mindestens einen ersten Schacht (35) besitzen, umfassend übereinander angeordnete mobile Fächer, die jeweils mindestens einen Speicherinhalt aufnehmen und nach unten verschieben können, wobei der mindestens eine erste Schacht ein Mittel zum vertikalen Speichern und folgegesteuerten Ausgeben von vorher in den Fächern angeordneten Speicherinhalten bildet,
**dadurch gekennzeichnet, dass** die ersten Speichermittel mindestens ein erstes Hubelement (34) umfassen, das geeignet ist, sich vertikal entlang des mindestens einen Schachtes (35) bis zu jedem der Fächer des mindestens einen Schachtes (35) zu bewegen;
dass die Vorbereitungsstelle Mittel zum Lesen eines Identifikators umfassen, der von einem gegebenen Speicherinhalt getragen wird, der vom ersten Hinförderer kommt,
und dass das Steuersystem dazu vorgesehen ist:
- eines der Fächer des mindestens einen ersten Schachts in Abhängigkeit vom gelesenen Identifikator und einer vorbestimmten Abfolge, die die Reihenfolge definiert, in der die Speicherinhalte aus dem mindestens einen ersten Schacht ausgegeben werden sollen, auszuwählen,
- das mindestens eine erste Hubelement derart zu steuern, dass es den gegebenen Speicherinhalt in das ausgewählte Fach eingibt.

2. Vorrichtung nach Anspruch 1, **dadurch gekennzeichnet, dass** die erste Schaltung ferner umfasst:
- erste Mittel (36 bis 38), um einem Bediener oder einem Automaten Speicherinhalte zu präsentieren, die aus dem mindestens einen ersten Schacht ausgegeben werden;
- erste Beseitigungsmittel (39, 310), die es ermöglichen, zu dem mindestens einen ersten Hubelement mindestens gewisse der Speicherinhalte zu transferieren, nachdem sie dem Bediener oder dem Automaten präsentiert wurden;
- einen ersten Rückförderer (313), der Speicherinhalte aufnimmt, die von den ersten Beseitigungsmittel über das mindestens eine erste Hubelement kommen.

3. Vorrichtung nach Anspruch 2, **dadurch gekennzeichnet, dass** die Vorbereitungsstelle eine zweite Schaltung besitzt, umfassend:
- einen zweiten Hinförderer (31), der Sendeinhalte von Produkten aufnimmt;
- zweite Mittel zum Speichern einer bestimmten Menge von Sendeinhalten, die von dem zweiten Hinförderer aufgenommen werden, wobei die zweiten Speichermittel umfassen:
* mindestens einen zweiten Schacht (35'), umfassend übereinander angeordnete mobile Fächer, die jeweils mindestens einen Sendeinhalt aufnehmen und nach unten verschieben können, wobei der mindestens eine zweite Schacht ein Mittel zur vertikalen Speicherung und folgegesteuerten Ausgabe von Leseinhalten, die vorher in den Fächern angeordnet wurden, bildet;
* mindestens ein zweites Hubelement (34'), das geeignet ist, sich vertikal entlang des mindestens einen zweiten Schachts (35') bis zu jedem der Fächer des mindestens einen zweiten Schachts (35') zu verschieben;
- zweite Mittel (36' bis 38'), um dem Bediener oder dem Automaten Leseinhalte zu präsentieren, die aus dem mindestens einen zweiten Schacht ausgegeben werden,
dass die Vorbereitungsstelle Mittel zum Lesen eines Identifikators, der von einem gegebenen Sendeinhalt, der vom zweiten Hinförderer kommt, getragen wird, umfasst, und dass das Steuersystem dazu vorgesehen ist:
- eines der Fächer des mindestens einen zweiten Schachts in Abhängigkeit vom gelesenen Identifikator und einer vorbestimmten Abfolge, die die Reihenfolge definiert, in der die Sendeinhalte aus dem mindestens einen zweiten Schacht ausgegeben werden sollen, auszuwählen,
- das mindestens eine zweite Hubelement derart zu steuern, dass es den gegebenen Sendeinhalt in das ausgewählte Fach eingibt.

4. Vorrichtung nach Anspruch 3, **dadurch gekennzeichnet, dass** die zweite Schaltung ferner umfasst:
- zweite Beseitigungsmittel (39', 310`), die es ermöglichen, zumindest gewisse der Sendeinhalte zu dem mindestens einen Hubelement zu transferieren, nachdem sie dem Bediener oder dem Automaten präsentiert wurden;
- einen zweiten Rückförderer (313), der Sendeinhalte aufnimmt, die von den zweiten Beseitigungsmitteln über das mindestens eine zweite Hubelement kommen.

5. Vorrichtung nach Anspruch 1, **dadurch gekennzeichnet, dass** die erste Schaltunt ferner Palettisierungsmittel (119) umfasst, die es ermöglichen, auf Paletten oder anderen Trägern Speicherinhalte, die von dem mindestens einen ersten Schacht kommen, anzuordnen.

6. Vorrichtung nach einem der Ansprüche 2 bis 5, **dadurch gekennzeichnet, dass** das Steuersystem derart vorgesehen ist, dass es das mindestens eine erste Hubelement steuert, um eines der Fächer des mindestens einen ersten Schachts frei zu lassen und in das frei gelassene Fach einen Speicherinhalt einzugeben, der von den ersten Beseitigungsmitteln kommt.

7. Vorrichtung nach einem der Ansprüche 1 bis 6, **dadurch gekennzeichnet, dass** die Vorbereitungsstelle mindestens eine erste Pufferspeicherstruktur (71, 72) aufweist, umfassend feste Fächer, die jeweils mindestens einen Speicherinhalt aufnehmen können, und dass das Steuersystem dazu vorgesehen ist, das mindestens eine Hubelement derart zu steuern, dass Speicherinhalte vorübergehend in der mindestens einen ersten Pufferspeicherstruktur gespeichert werden.

8. Vorrichtung nach einem der Ansprüche 1 bis 7, **dadurch gekennzeichnet, dass** jedes Hubelement mindestens zwei Inhalte nebeneinander und/oder mindestens zwei Inhalte übereinander transportieren kann.

9. Vorrichtung nach einem der Ansprüche 1 bis 8, **dadurch gekennzeichnet, dass** mindestens ein Schacht mit mindestens zwei Hubelementen zusammenwirkt.

10. Vorrichtung nach einem der Ansprüche 1 bis 9, **dadurch gekennzeichnet, dass** mindestens ein Hubelement mit mindestens zwei Schächten zusammenwirkt.

11. Vorrichtung nach einem der Ansprüche 3 und 4, **dadurch gekennzeichnet, dass** unter dem mindestens einen ersten Schacht und dem mindestens einen zweiten Schacht mindestens ein geteilter Schacht Speicherinhalte und Sendeinhalte aufnimmt,
und dass das Steuersystem derart vorgesehen ist, dass es die ersten und zweiten Präsentationsmittel derart steuert, dass sie zusammenwirken, um dem Bediener oder dem Automaten Speicherinhalte und Sendeinhalte zu präsentieren, die aus dem mindestens einen geteilten Schacht ausgegeben werden.

12. Vorrichtung nach einem der Ansprüche 1 bis 10, **dadurch gekennzeichnet, dass** mindestens ein Schacht zwei Zahnriemen (51, 52) umfasst, die mit synchronisierten Mitnehmern (53) ausgestattet sind.

13. Vorrichtung nach einem der Ansprüche 1 bis 12, **dadurch gekennzeichnet, dass** jeder Förderer (31, 313) in einer Luftposition in mindestens zwei Meter zum Boden angeordnet ist.

14. Vorrichtung nach einem der Ansprüche 2 bis 4, **dadurch gekennzeichnet, dass** das Steuersystem dazu vorgesehen ist, die ersten Präsentationsmittel derart zu steuern, dass sie ein erstes Karussell (61) für den Umlauf den Speicherinhalten bildet, das es ermöglicht, dem Bediener oder dem Automaten mindestens zweimal einen gegebenen Speicherinhalt zu präsentieren, ohne den gegebenen Speicherinhalt wieder durch den mindestens einen ersten Schacht laufen zu lassen.

15. Vorrichtung nach einem der Ansprüche 3 und 4, **dadurch gekennzeichnet, dass** das Steuersystem dazu vorgesehen ist, die zweiten Präsentationsmittel derart zu steuern, dass sie ein zweites Karussell (62) für den Umlauf von Sendeinhalten bilden, das es ermöglicht, dem Bediener oder dem Automaten mindestens zweimal einen gegebenen Sendeinhalt zu präsentieren, ohne den gegebenen Sendeinhalt wieder durch den mindestens einen zweiten Schacht laufen zu lassen.

16. Vorrichtung nach den Ansprüchen 14 und 15, **dadurch gekennzeichnet, dass** das Steuersystem dazu vorgesehen ist, einen Modus der Vorbereitung von Aufträgen zu wählen, der der Gruppe angehört, umfassend:
- einen ersten Modus, bei dem es für einen selben Sendeinhalt, der dem Bediener oder dem Automaten präsentiert wird, das erste Karussell ermöglicht, dem Bediener oder dem Automaten mehrere Speicherinhalte nacheinander zu präsentieren;
- einen zweiten Modus, bei dem es für einen selben Speicherinhalt, der dem Bediener oder dem Automaten präsentiert wird, das zweite Karussell ermöglicht, dem Bediener oder dem Automaten mehrere Sendeinhalte nacheinander zu präsentieren;
- einen dritten Modus, bei dem es für ein Paar eines gegebenen Speicherinhalts und eines gegebenen Sendeinhalts das erste Karussell ermöglicht, dem Bediener oder dem Automaten den gegebenen Speicherinhalt zu präsentieren, und das zweite Karussell ermöglicht, dem Bediener oder Automaten den gegebenen Sendeinhalt zu präsentieren.

17. Automatisiertes Speichersystem **dadurch gekennzeichnet, dass** es ein Speichermagazin (7) und mindestens eine Vorrichtung nach einem der Ansprüche 1 bis 16 umfasst.

## Claims

1. Unit comprising an order-picking station managed by a management system, said picking station possessing a first circuit comprising a first outward conveyor (31), which receives product-storage containers, and first means for accumulating a specified quantity of storage containers received by the first outward conveyor, the said first accumulating means comprising at least one first stack (35) comprising superposed movable bays, each capable of receiving and displacing downwards at least one storage container, the said at least one first stack forming a means for the vertical accumulation and sequenced distribution of storage containers which have been placed in the bays beforehand,
**characterised in that** the first accumulating means comprise at least one first elevator (34) which is capable of vertical displacement along the said at least one first stack (35) as far as each of the bays belonging to the said at least one first stack (35); **in that** the picking station comprises means for reading an identifier carried by a given storage container coming from the first outward conveyor;
and **in that** the management system is adapted to:
- select one of the bays belonging to the said at least one first stack, in dependence upon the identifier read and upon a predetermined sequence defining the order in which the storage containers must pass out of the said at least one first stack; and
- manage the said at least one first elevator in order to cause the given storage container to enter the bay selected.

2. Unit according to Claim 1, **characterised in that** the first circuit further comprises:
- first means (36 to 38) for presenting, to an operator or a robot, storage containers passing out of the said at least one first stack;
- first evacuating means (39, 310) which make it possible to transfer, to the said at least one first elevator, at least certain of the storage containers after they have been presented to the operator or the robot;
- a first return conveyor (313) which receives storage containers originating from the first evacuating means via the said at least one first elevator.

3. Unit according to Claim 2, **characterised in that** the picking station possesses a second circuit comprising:
- a second outward conveyor (31) which receives product-shipping containers;
- second means for accumulating a specified quantity of shipping containers which are received by the second outward conveyor, the said second accumulating means comprising:
* at least one second stack (35') comprising superposed movable bays, each capable of receiving and displacing downwards at least one shipping container, the said at least one second stack forming a means for the vertical accumulation and sequenced distribution of shipping containers which have been placed in the bays beforehand;
* at least one second elevator (34') which is capable of vertical displacement along the said at least one second stack (35') as far as each of the bays belonging to the said at least one second stack (35');
- second means (36' to 38') for presenting, to the operator or the robot, shipping containers passing out of the said at least one second stack;
**in that** the picking station comprises means for reading an identifier carried by a given shipping container coming from the second outward conveyor;
and **in that** the management system is adapted to:
- select one of the bays belonging to the said at least one second stack, in dependence upon the identifier read and upon a predetermined sequence defining the order in which the shipping containers must pass out of the said at least one second stack; and
- manage the said at least one second elevator in order to cause the given shipping container to enter the bay selected.

4. Unit according to Claim 3, **characterised in that** the second circuit further comprises:
- second evacuating means (39', 310') which make it possible to transfer, to the said at least one second elevator, at least certain of the shipping containers after they have been presented to the operator or the robot;
- a second return conveyor (313) which receives shipping containers originating from the second evacuating means via the said at least one second elevator.

5. Unit according to Claim 1, **characterised in that** the first circuit further comprises palletising means (119) which make it possible to dispose, on pallets or other supports, storage containers passing out of the said at least one first stack.

6. Unit according to any of Claims 2 to 5, **characterised in that** the management system is adapted to manage the said at least one first elevator in order to leave free one of the bays belonging to the said at least one first stack and to cause a storage container originating from the first evacuating means to enter the bay which has been left free.

7. Unit according to any of Claims 1 to 6, **characterised in that** the picking station comprises at least one first buffer storage structure (71, 72) comprising fixed bays which are each capable of receiving at least one storage container, and **in that** the management system is adapted to manage the said at least one first elevator in order to temporarily store storage containers in the said at least one first buffer storage structure.

8. Unit according to any of Claims 1 to 7, **characterised in that** each elevator is capable of transporting at least two containers side by side and/or at least two superposed containers.

9. Unit according to any of Claims 1 to 8, **characterised in that** at least one stack cooperates with at least two elevators.

10. Unit according to any of Claims 1 to 9, **characterised in that** at least one elevator cooperates with at least two stacks.

11. Unit according to either of Claims 3 or 4, **characterised in that**, from among the said at least one first stack and the said at least one second stack, at least one shared stack receives storage containers and shipping containers; and
**in that** the management system is adapted to manage the first and second presenting means so that they cooperate in order to present, to the operator or the robot, storage containers and shipping containers passing out of the said at least one shared stack.

12. Unit according to any of Claims 1 to 10, **characterised in that** at least one stack comprises two notched belts (51, 52) equipped with synchronised stops (53).

13. Unit according to any of Claims 1 to 12, **characterised in that** each conveyor (31, 313) is located in an overhead position, at two metres, at least, from the ground.

14. Unit according to any of Claims 2 to 4, **characterised in that** the management system is adapted to manage the first presenting means so that they form a first carousel (61) for circulating storage containers, which makes it possible to present a given storage container to the operator or the robot at least twice, without causing the said given storage container to pass through the said at least one first stack again.

15. Unit according to either of Claims 3 or 4, **characterised in that** the management system is adapted to manage the second presenting means so that they form a second carousel (62) for circulating shipping containers, which makes it possible to present a given shipping container to the operator or the robot at least twice, without causing the said given shipping container to pass through the said at least one second stack again.

16. Unit according to Claims 14 and 15, **characterised in that** the management system is adapted to adopt an order-picking mode belonging to the group comprising:
- a first mode in which, in the case of the same shipping container presented to the operator or the robot, the first carousel makes it possible to present a number of storage containers to the operator or the robot in succession;
- a second mode in which, in the case of the same storage container presented to the operator or the robot, the second carousel makes it possible to present a number of shipping containers to the operator or the robot in succession;
- a third mode in which, in the case of a pair of given storage and shipping containers, the first carousel makes it possible to present the given storage container to the operator or the robot, and the second carousel makes it possible to present the given shipping container to the operator or the robot.

17. Automated storage system, **characterised in that** it comprises a storage warehouse (7) and at least one unit according to any of Claims 1 to 16.
